# EUROPEAN PATENT APPLICATION

(11) **EP 4 721 544 A1**
(43) Date of publication of application: **08.04.2026**
(21) Application number: 24814080.8
(22) Date of filing: 30.04.2024
(51) Int. Cl.: A01D 34/64, A01D 34/74, A01D 34/78, A01D 34/82, A01D 34/00, A01D 69/06, A01D 69/08

(54) **LAWN MOWER AND HEIGHT ADJUSTING METHOD**

(30) Priority: 29.05.2023 CN 202310620414; 29.05.2023 CN 202321333405 U; 07.08.2023 CN 202310987194; 07.08.2023 CN 202322122411 U; 06.09.2023 CN 202322424950 U; 20.11.2023 CN 202323134556 U
(71) Applicant: Greenworks (Jiangsu) Co., Ltd., Changzhou, Jiangsu 213023 (CN)
(72) Inventor: CAO, Jin, hangzhou, Jiangsu 213023 (CN); GAO, Jie, hangzhou, Jiangsu 213023 (CN); WANG, Huage, hangzhou, Jiangsu 213023 (CN); ZHUANG, Xian, hangzhou, Jiangsu 213023 (CN)
(74) Representative: Bergenstråhle & Partners AB
(86) International application number: PCT/CN2024/090751
(87) International publication number: WO 2024/244875

(57) **Abstract**

A mower includes a main body, a height adjustment motor, a gear assembly, a clutch assembly and a cutter motor assembly. The height adjustment motor drives the gear assembly to rotate through the clutch assembly. The clutch assembly includes a connecting shaft movably connected with the height adjustment motor to achieve a separation and an engagement of the height adjustment motor and the gear assembly. The cutter motor assembly includes an adjustment rod, the adjustment rod is connected with the gear assembly and can be lifted and lowered reciprocally under a drive of the gear assembly to drive a blade to be lifted and lowered reciprocally. The adjustment rod is provided with an end part abutting the gear assembly to limit a rotation of the gear assembly, so that the height adjustment motor is separated from the connecting shaft.

## Description

### TECHNICAL FIELD

The disclosure relates to a technical field of garden tools, and particularly relates to a mower and a height adjustment method thereof.

### BACKGROUND

At present, mowers have been widely used in the field of garden tools. Researchers have designed a mower with adjustable cutter height to adapt to different environments and to mow lawns of different heights according to different needs. However, conventional mowers basically require manual adjustment of the cutter height, which cannot realize the intelligence of the mower, resulting in a poor user experience.

In view of this, it is necessary to improve the conventional mowers to solve the problems mentioned above.

### SUMMARY

The disclosure provides a mower and a height adjustment method thereof so as to solve a technical problem in prior art that the cutter height needs to be adjusted manually.

One or more embodiments of the disclosure provide the mower for adjusting a height of a blade relative to a working surface. The mower includes a main body, a height adjustment motor, a gear assembly, a clutch assembly and a cutter motor assembly.

The height adjustment motor is installed in the main body.

The gear assembly is connected with the height adjustment motor and driven by the height adjustment motor.

The clutch assembly is arranged between the gear assembly and the height adjustment motor and includes a connecting shaft, and the connecting shaft is movably connected with the height adjustment motor.

The cutter motor assembly is installed inside the main body and includes an adjustment rod. The adjustment rod is fixed on the cutter motor assembly. The adjustment rod is connected with the gear assembly and can be lifted and lowered reciprocally under a drive of the gear assembly to drive the blade to be lifted and lowered reciprocally, thereby adjusting the height of the blade relative to the working surface. The adjustment rod is provided with an end part, the end part can abut against the gear assembly to limit a rotation of the gear assembly, so that the connecting shaft is separated from the height adjustment motor.

As a further improvement of the disclosure, the gear assembly includes a first gear and a connecting part arranged on an axis of the first gear, the connecting shaft is movably connected with the connecting part, the height adjustment motor includes an output shaft and a shaft sleeve sleeved on the output shaft, the shaft sleeve rotates synchronously with the output shaft, and at least part of the shaft sleeve is accommodated in the connecting part and abuts against the connecting shaft so as to enable the height adjustment motor to drive the first gear to rotate through the connecting shaft.

As a further improvement of the disclosure, the shaft sleeve is provided with a first limiting groove, the connecting part is provided with a second limiting groove partially overlapping with the first limiting groove, the connecting shaft is capable of moving in the second limiting groove and being accommodated in an overlapping part of the first limiting groove and the second limiting groove so as to enable the output shaft to be engaged with the first gear, when the connecting shaft moves out of the overlapping part of the first limiting groove and the second limiting groove, and the output shaft is separated from the first gear.

As a further improvement of the disclosure, the first limiting groove is concave from an end surface of the shaft sleeve along the axis of the first gear, a concave direction of the second limiting groove is the same as a concave direction of the first limiting groove, the first limiting groove is arc-shaped, and the connecting shaft is cylindrical.

As a further improvement of the disclosure, the mower includes an outer frame, and the clutch assembly includes an elastic component, the elastic component is arranged between the connecting shaft and the outer frame to keep the connecting shaft accommodated in the overlapping part of the first limiting groove and the second limiting groove.

As a further improvement of the disclosure, the gear assembly includes a second gear meshed with the first gear, the second gear is provided with a first perforation hole, the adjustment rod is accommodated in the first perforation hole and is capable of being lifted and lowered reciprocally in the first perforation hole.

As a further improvement of the disclosure, an internal thread is arranged on an inner wall surface of the first perforation hole, and an external thread is arranged on an outer wall surface of the adjustment rod, the external thread is engaged with the internal thread, and the second gear rotates to drive the adjustment rod to be lifted and lowered reciprocally.

As a further improvement of the disclosure, the cutter motor assembly includes a fixing plate connected with the end part, the adjustment rod is driven by the internal thread to be lifted and lowered until the fixing plate abuts against the gear assembly to limit a rotation of the gear assembly.

As a further improvement of the disclosure, the cutter motor assembly further includes a positioning component and a plurality of positioning teeth distributed on the positioning component, the mower includes a sensing device and a sensing groove arranged on the sensing device, at least portion of the plurality of the positioning teeth extends into the sensing groove, when the cutter motor assembly is lifted and lowered reciprocally, the plurality of the positioning teeth moves in the sensing groove.

As a further improvement of the disclosure, an arrangement direction of the positioning component is the same as a lifting direction of the adjustment rod, and the plurality of the positioning teeth is arranged in a zigzag shape on the positioning component.

One or more embodiments of the disclosure provide a height adjustment method applied to a mower, and the mower includes the main body, the gear assembly, the clutch assembly, the cutter motor assembly and a controller.

The height adjustment motor is installed in the main body.

The gear assembly is connected with the height adjustment motor and driven by the height adjustment motor.

The clutch assembly is arranged between the gear assembly and the height adjustment motor and includes a connecting shaft, and the connecting shaft is movably connected with the height adjustment motor.

The cutter motor assembly is installed inside the main body and includes an adjustment rod, and the adjustment rod fixed on the cutter motor assembly, driven by the gear assembly, and provided with an end part.

The controller is electrically connected with the height adjustment motor.

The controller is configured to:
control the height adjustment motor to rotate so as to drive the cutter motor assembly to be lifted and lowered;
monitor a current of the height adjustment motor; and
control the height adjustment motor to stop or turn when the current of the height adjustment motor fluctuates periodically.

As a further improvement of the disclosure, the mower further includes a sensing device, and the sensing device senses a height change of the cutter motor assembly and is communicated with the controller.

As a further improvement of the disclosure, determining that the height adjustment motor is idling when the current of the height adjustment motor is not 0 and the height change of the cutter motor assembly is 0 within a certain period of time.

As a further improvement of the disclosure, the sensing device includes positioning teeth and a sensing groove, and senses the height change by calculating a number of the positioning teeth passing through the sensing groove.

As a further improvement of the disclosure, the height adjustment method further includes operations as follows.

The number of the positioning teeth corresponding to a set height is calculated.

The height adjustment motor is reversely driven.

The height adjustment motor is stopped driving when detecting that the number of the positioning teeth passing through the sensing groove is achieved.

In summary, the mower of the disclosure drives the gear assembly to rotate through the height adjustment motor, and then drives the adjustment rod to be lifted and lowered reciprocally, thereby realizing an automatic adjustment of a height between the blade and the working surface, and improving user experience. Through arranging the connecting shaft movably connected with the height adjustment motor between the gear assembly and the height adjustment motor, when the end part of the adjustment rod abuts against the gear assembly, the connecting shaft is separated from the height adjustment motor, which causes the height adjustment motor to idle, avoids a damage caused by an overload of the height adjustment motor, and extends a duration life of the height adjustment motor.

One or more embodiments of the disclosure provide the mower. The mower includes the main body, an outer housing, a lamp and a cable assembly.

The outer housing is detachably connected with the main body.

The lamp is fixedly connected with the outer housing and exposed outside the outer housing.

The cable assembly connects the lamp with the main body.

Wherein, the cable assembly includes a first connecting part and a second connecting part, the first connecting part and the second connecting part are detachably connected with each other, the first connecting part is fixedly connected with the lamp through a first cable, and the second connecting part is fixedly connected with the main body through a second cable.

As a further improvement of the disclosure, the first connecting part and the second connecting part are located between the outer housing and the main body, and are detachably fixed on an outer wall surface of the main body.

As a further improvement of the disclosure, the main body includes a chassis and a casing covered on the chassis, the casing is provided with a second perforation hole, the second cable correspondingly connected with the second connecting part passes through the second perforation hole and is fixedly connected with the main body.

As a further improvement of the disclosure, the casing is further provided with a plug-in part, the second connecting part is correspondingly provided with a plug-in groove, and the plug-in part is accommodated in the plug-in groove to achieve a detachable connection between the casing and the second connecting part.

As a further improvement of the disclosure, the plug-in part includes a boss and a plug-in component that perpendicular to each other. The plug-in component is roughly T-shaped and includes a plug-in post accommodated in the plug-in groove and a connecting post connecting the plug-in post with the casing. The boss abuts against one end of the second connecting part.

As a further improvement of the disclosure, a buckling part is arranged at one end of the second connecting part that abuts against the boss. When the plug-in part is connected with the second connecting part, the buckling part is buckled on a side of the boss away from the plug-in component.

As a further improvement of the disclosure, the outer housing is provided with an installation hole, and the lamp is detachably fixed in the installation hole.

As a further improvement of the disclosure, the lamp is provided with a clamping component. The outer housing is correspondingly provided with a supporting component around the installation hole. The clamping component and the supporting component is matched with each other to achieve a clamping and fixing between the lamp and the outer housing.

As a further improvement of the disclosure, the lamp can emit one or more of white light, blue light and red light.

As a further improvement of the disclosure, in a mower of a robotic mower, the lamp is arranged at a front end and/or a rear end and/or a side end of the outer housing.

In summary, the robotic mower of the disclosure arranges the first connecting part detachably connected with the second connecting part between the lamp and the main body, so that the lamp can be replaced by simply disassembling the first connecting part and the second connecting part without releasing a fixed connection between the cable and the main body. The operation is simple and practical.

One or more embodiments of the disclosure provide the mower. The mower includes the chassis and a driving assembly.

The driving assembly is arranged on two sides of the chassis of the mower and includes a walking motor and a walking wheel assembled on an outer side of the walking motor, and the walking motor is capable of rotating and driving the walking wheel to rotate together.

Wherein, a protrusion is arranged on an outer wall of the walking motor, a concave groove is correspondingly arranged on the walking wheel, when the walking motor is assembled and fixed with the walking wheel, the protrusion is accommodated in the concave groove.

As a further improvement of the disclosure, the protrusion is a protruding block protruding outward from the outer wall of the walking motor, and there is a plurality of the blocks arranged at intervals. The concave groove is arranged on the walking wheel, and the protruding block is accommodated in the concave groove.

As a further improvement of the disclosure, a first positioning hole is arranged on the protrusion, and a second positioning hole is correspondingly arranged on the concave groove. When the protrusion is accommodated in the concave groove, the first positioning hole is aligned with the second positioning hole so that the positioning component passes through the first positioning hole and the second positioning hole to fix the protrusion to the concave groove.

As a further improvement of the disclosure, the mower further includes a wheel cover arranged on an outer side of the walking wheel, and the wheel cover is buckled and connected with the walking wheel.

As a further improvement of the disclosure, the walking wheel is provided with a detachable motor cover, and the motor cover is arranged away from the chassis and can rotate together with the walking wheel.

As a further improvement of the disclosure, the motor cover includes a first motor cover buckled with the walking motor and a second motor cover installed on an outer side of the first motor cover, and the second motor cover partially covers the first motor cover so that the first motor cover and the second motor cover can be exposed at the same time.

As a further improvement of the disclosure, the walking wheel is provided with an installation groove, the first motor cover is correspondingly provided with an installation post, and the installation post is accommodated in the installation groove to achieve a fixed connection between the walking motor and the first motor cover.

As a further improvement of the disclosure, the first motor cover is provided with an assembling groove, and the second motor cover is correspondingly provided with an assembling post. The assembling post is accommodated in the assembling groove to achieve a fixed connection between the first motor cover and the second motor cover.

As a further improvement of the disclosure, the mower further includes the outer housing, and the outer housing covers on the chassis and is fixedly connected with the chassis. An orthographic projection of the outer housing on a horizontal plane is defined as a first projection, and orthographic projections of the chassis and two driving assemblies on the horizontal plane is defined as a second projection. The first projection covers the second projection.

As a further improvement of the disclosure, the chassis is rectangular and includes a first side wall and a second side wall extending in a moving direction of the mower. The outer housing is also rectangular and includes a third side wall and a fourth side wall parallel to the first side wall and the second side wall, a first cavity is formed between the third side wall and the first side wall, another first cavity is also formed between the fourth side wall and the second side wall, and the driving assembly is accommodated in the first cavity.

In summary, the mower of the disclosure is provided with the independent driving assemblies on both sides of the chassis, each including the walking motor and the walking wheel assembled on the outer side of the walking motor, so that the walking wheels and the walking motors on both sides are independent of each other, which reduces a wear of the walking wheels, enables it to be more convenient to replace the walking wheels, and saves use cost.

One or more embodiments of the disclosure provide the mower. The mower includes the main body, a plurality of support legs and a control assembly.

A bottom of the main body is provided with a working device.

The plurality of support legs is arranged on two sides of the bottom of the main body, and the support legs are provided with walking wheels. The support legs include a height adjustment assembly for adjusting a height of the support legs, one end of the height adjustment assembly is connected with the main body, and the other end of the height adjustment assembly is connected with the walking wheel.

The control assembly is installed in the main body and is connected with the height adjustment assembly to control the height adjustment assemblies of different legs to adjust the heights of different legs so that the main body remains in a horizontal state.

As a further improvement of the disclosure, the height adjustment assembly in each leg is individually controlled and adjusted by the control assembly.

As a further improvement of the disclosure, the height adjustment assembly further includes a screw rod and a motor.

The motor is connected with the screw rod to drive the screw rod to move linearly.

As a further improvement of the disclosure, the height adjustment assembly further includes a locking structure, and the locking structure is connected with the screw rod to fix the screw rod.

As a further improvement of the disclosure, the locking structure includes a limiting hole, a limiting screw rod, and a locking motor.

A plurality of limiting holes is arranged on the screw rod at intervals along its axial direction.

The locking motor is connected with the limiting screw rod and drives the limiting screw rod to move linearly so as to enable the limiting screw rod to be inserted into the limiting hole or drawn out from the limiting hole.

As a further improvement of the disclosure, the height adjustment assembly further includes a fixed housing and a telescopic housing. The fixed housing is connected with the main body, and the motor is installed in the fixed housing.

The telescopic housing is fixedly connected with the screw rod, and the walking wheel is installed at a bottom of the telescopic housing. The motor drives the screw rod to move up and down to drive the telescopic housing to slide up and down in the fixed housing.

As a further improvement of the disclosure, the control assembly includes a detection module for detecting a tilt state of the main body, and the detection module is installed in the main body.

One or more embodiments of the disclosure provide the mower. The mower includes the main body, a plurality of support legs and a control assembly.

The bottom of the main body is provided with a working device.

The plurality of support legs is arranged on two sides of the bottom of the main body, and the support legs are provided with walking wheels. The support legs include a leg spacing adjustment assembly for adjusting a spacing of the support legs, and the leg spacing adjustment assembly is connected with the main body.

The control assembly is installed in the main body and is electrically connected with the control assembly. The control assembly controls the leg spacing adjustment assembly to adjust the spacing between the two support legs on the two sides of the bottom of the main body.

As a further improvement of the disclosure, the leg spacing adjustment assembly in each leg is individually controlled and adjusted by the control assembly.

As a further improvement of the disclosure, the leg spacing adjustment assembly includes the screw rod and the motor.

The motor is connected with the screw rod to drive the screw rod to move linearly.

In an embodiment of the disclosure, the leg spacing adjustment assembly further includes the locking structure, and the locking structure is connected with the screw rod to fix the screw rod.

As a further improvement of the disclosure, the locking structure includes the limiting hole, the limiting screw rod, and the locking motor.

A plurality of limiting holes is arranged on the screw rod at intervals along its axial direction.

The locking motor is connected with the limiting screw rod and drives the limiting screw rod to move linearly so as to enable the limiting screw rod to be inserted into the limiting hole or drawn out from the limiting hole.

One or more embodiments of the disclosure provide a control method of the mower, which includes following operations.

The tilt state of the main body of the mower is detected.

According to the tilt state, the height adjustment assembly of the corresponding support legs of the mower is controlled to adjust the height of the support leg until the main body of the mower maintains the horizontal state.

One or more embodiments of the disclosure provide the control method of the mower, which includes following operations.

A spacing between left and right support legs of the mower when it is working is determined.

When the mower leaves a charging station and begins operating, the spacing between the left and right support legs of the mower is changed.

In an embodiment of the disclosure, the method further includes following operations.

When a charging instruction is received or a voltage of the mower is lower than a recharging threshold,

the leg spacing adjustment assembly in the support legs of the mower is controlled to adjust the spacing between the left and right support legs of the mower so that the spacing between the two legs of the mower matches the charging station;

The mower is controlled to return to charging.

As a further improvement of the disclosure, the spacings between the left and right support legs of the mower increase or decrease in sequence.

As a further improvement of the disclosure, the spacings between the left and right support legs of the mower vary randomly.

In summary, through arranging support legs with height adjustment assemblies around the main body, and individually controlling each height adjustment assembly through the control assembly, different support legs may be adjusted to different heights. During an operation of the mower, when encountering a dirt slope or a pit, the main body of the mower tilts, and the control assembly can control the height adjustment assemblies in the corresponding support legs according to the tilt state of the main body, so that the main body of the mower remains in the horizontal state, thereby ensuring that a mowing height of the mower always remains consistent. And through arranging support legs with leg spacing adjustment assemblies around the main body, and individually controlling each leg spacing adjustment assembly through the control assembly, during a returning process of the mower, the leg spacing adjustment assembly is controlled by the control assembly so that the walking wheels of the mower are randomly adjusted to a certain width, and then return to charge, so as to avoid repeated crushing of the lawn and causing crushing traces.

### BRIEF DESCRIPTION OF THE DRAWINGS

In order to explain technical solutions of embodiments of the disclosure more clearly, the following will briefly introduce drawings used in a description of the embodiments or the conventional art. Obviously, the drawings in the following description are only some embodiments of the disclosure. For those of ordinary skill in the art, other drawings may be obtained based on these drawings without creative work.
FIG. 1 is a part of a perspective schematic view of a mower according to at least one embodiment of the disclosure.
FIG. 2 is an exploded view of a height adjustment device and a blade in FIG. 1.
FIG. 3 is a partial enlarged view of part A in FIG. 2.
FIG. 4 is an exploded view of a height adjustment motor and a shaft sleeve in FIG. 2.
FIG. 5 is a cross-sectional view of a height adjustment device in FIG. 2.
FIG. 6 is a partial enlarged view of part B in FIG. 5.
FIG. 7 is a perspective schematic view of a cutter motor assembly in FIG. 2.
FIG. 8 is a perspective schematic view of an outer frame and a sensing device in FIG. 2.
FIG. 9 is a perspective schematic view of a shaft sleeve in FIG. 2.
FIG. 10 is a perspective schematic view of a first gear in FIG. 2.
FIG. 11 is a schematic structural view of a robotic mower according to at least one embodiment of the disclosure.
FIG. 12 is a schematic structural view of an outer housing and a lamp in FIG. 11.
FIG. 13 is a partial enlarged view of FIG. 12.
FIG. 14 is an exploded view of an outer housing and a lamp in FIG. 12.
FIG. 15 is a schematic structural view of a machine body in FIG. 11.
FIG. 16 is a partial enlarged view of FIG. 15.
FIG. 17 is an exploded view of a first connecting part and a second connecting part in FIG. 16.
FIG. 18 is an exploded view of a machine body and a lead line component in FIG. 15.
FIG. 19 is a partial enlarged view of FIG. 18.
FIG. 20 is a schematic structural view of a mower according to at least one embodiment of the disclosure.
FIG. 21 is a schematic structural view of FIG. 20 from another angle.
FIG. 22 is an exploded view of a driving assembly in FIG. 21.
FIG. 23 is an exploded view of a walking wheel and a walking motor in FIG. 22.
FIG. 24 is an exploded view of a walking wheel and a wheel cover in FIG. 22.
FIG. 25 is an exploded view of a first motor cover and a second motor cover in FIG. 22.
FIG. 26 is another schematic structural view of a mower according to at least one embodiment of the disclosure.
FIG. 27 is a schematic structural view of a height adjustment assembly of a support leg of a mower according to at least one embodiment of the disclosure.
FIG. 28 is a schematic structural view of a leg spacing adjustment assembly of a mower according to at least one embodiment of the disclosure.
FIG. 29 is a schematic view of a mower on a dirt slope according to at least one embodiment of the disclosure.
FIG. 30 is a schematic view of a mower in a pit according to at least one embodiment of the disclosure.
FIG. 31 is a schematic flowchart of a control method of a mower according to at least one embodiment of the disclosure.
FIG. 32 is another schematic flowchart of a control method of a mower according to at least one embodiment of the disclosure.
FIG. 33 is a control schematic flowchart of a mower returning to charge according to at least one embodiment of the disclosure.

### DETAILED DESCRIPTION

The following describes the implementation of the disclosure through specific embodiments, and those skilled in the art can easily understand other advantages and effects of the disclosure from the content disclosed in this specification. The disclosure may also be implemented or applied through other different specific embodiments. Various details in this specification may also be modified or changed based on different viewpoints and applications without departing from the disclosure.

It should be noted that drawings provided in the embodiments are only illustrative of a basic idea of the disclosure. The drawings only show assemblies related to the disclosure instead of drawing according to the number, shape and size of the assemblies in actual implementation. In actual implementation, the type, quantity and ratio of each assembly may be changed at will, and a layout of the assemblies may also be more complicated.

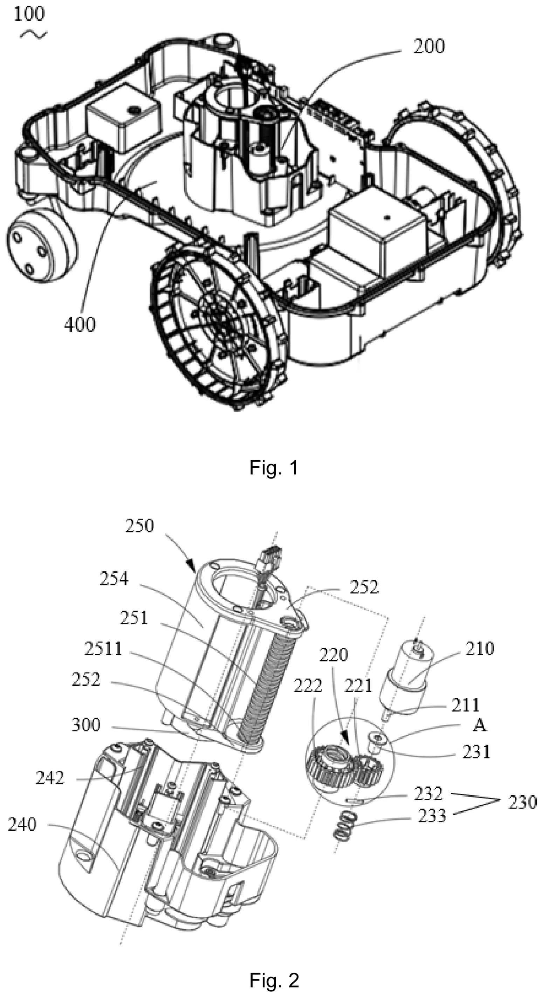

Please refer to FIG. 1. The disclosure provides a mower 100 for mowing a lawn. The mower 100 includes a main body 400, an energy storage device, a walking device, a detection device, a height adjustment device 200 and a working device 300. Wherein, the main body 400, the energy storage device, the walking device and the detection device may all be designed according to an actual situation and conventional technology, and will not be described in detail here. The height adjustment device 200 and the working device 300 are both arranged in the main body 400 and are connected with each other. The height adjustment device 200 can drive the working device 300 to move upward or downward relative to a working surface to adjust a height of the working device 300 relative to the working surface (ground) to adapt to lawns in different environments and trim lawns of different heights.

In this embodiment, the working device 300 is a blade on the mower 100. Of course, in other embodiments, the working device 300 may also be a punching device, a cleaning device, or other device that needs to be adjusted to different heights according to different environments, which is not limited here.

The working surface is the lawn or the ground, and the height adjustment device 200 is a device for driving a cutter device to move so as to adjust a height between the cutter device and the ground.

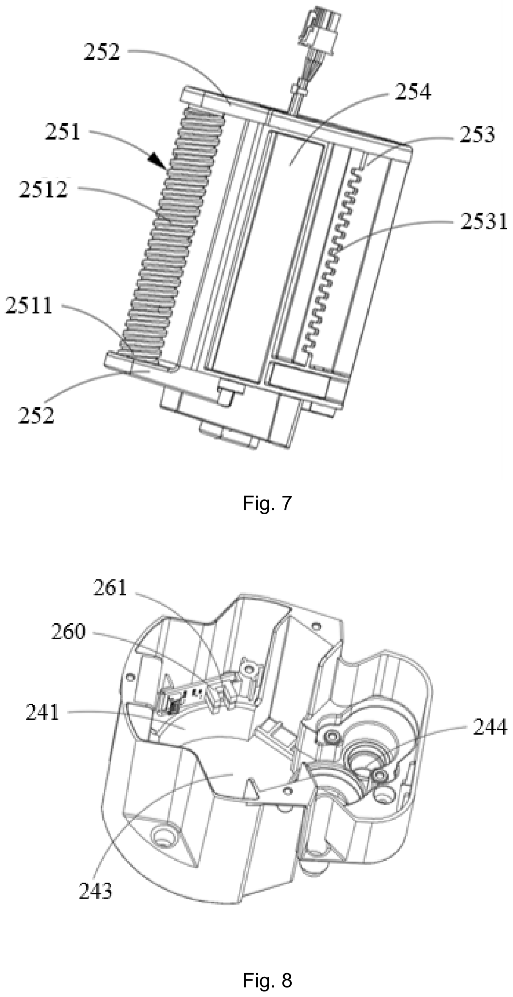

Please refer to FIG. 2 and FIG. 8. The height adjustment device 200 includes a height adjustment motor 210, a gear assembly 220, a clutch assembly 230, an outer frame 240 and a cutter motor assembly 250. Wherein, an accommodating cavity 241 is formed inside the outer frame 240, and the height adjustment motor 210, the gear assembly 220, the clutch assembly 230 and the cutter motor assembly 250 are all accommodated in the accommodating cavity 241. On one hand, the outer frame 240 protects the devices from external collisions and damages, and on the other hand, the outer frame 240 integrates the devices into a whole, which is convenient for installation and disassembly. The height adjustment motor 210 is in installed inside the main body 400, and the height adjustment motor 210 and the gear assembly 220 are fixed on the outer frame 240. The working device 300 is connected with the cutter motor assembly 250 and is arranged at a tail end of the cutter motor assembly 250 close to the working surface. The height adjustment motor 210 drives the cutter motor assembly 250 to be lifted and lowered reciprocally through the gear assembly 220. The cutter motor assembly 250 drives the working device 300 to move to adjust a distance between the working device 300 and the working surface.

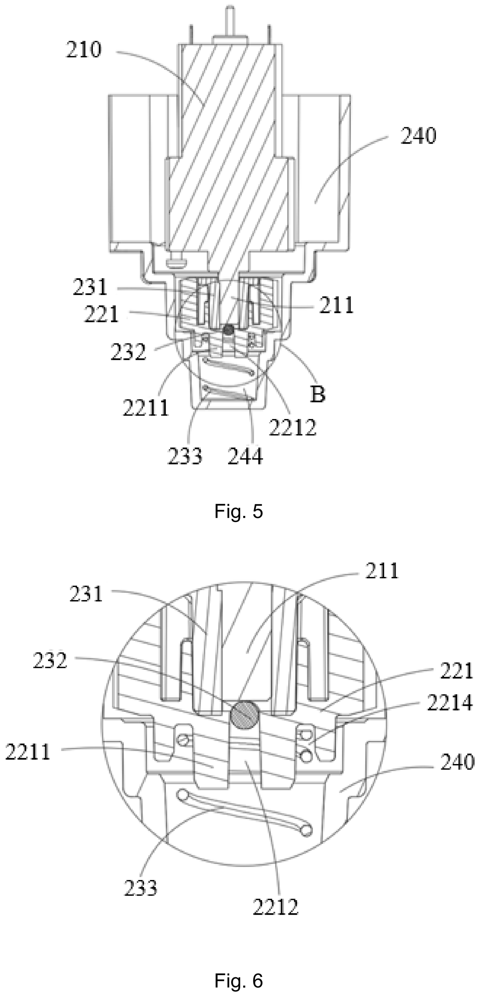

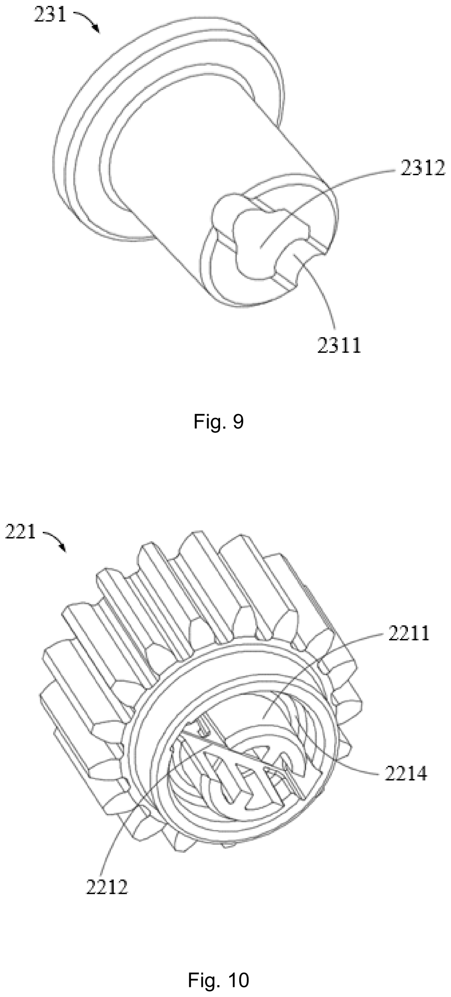

Please refer to FIG. 2 through FIG. 10. The outer frame 240 is further provided with a working hole 243 communicated with the accommodating cavity 241 and a sliding assembly 242 arranged corresponding to the working hole 243. The cutter motor assembly 250 is accommodated in the accommodating cavity 241 and connected with the outer frame 240 through the sliding assembly 242. The cutter motor assembly 250 may slide along the sliding assembly 242, so that the cutter motor assembly 250 can move upward or downward in the working hole 243. An arrangement of the sliding assembly 242 improves a stability of the working device 300 during movement.

The outer frame 240 is detachably installed in the main body 400 to protect the height adjustment motor 210, the gear assembly 220, the clutch assembly 230, the cutter motor assembly 250 and the working device 300. Of course, in other embodiments, the outer frame 240 may also be designed as an integral part of the main body 400.

Please refer to FIG. 2 through FIG. 10. The height adjustment motor 210 is coupled to the gear assembly 220 so that the height adjustment motor 210 drives the gear assembly 220 to rotate. The clutch assembly 230 is arranged between the gear assembly 220 and the height adjustment motor 210. The clutch assembly 230 includes a connecting shaft 232 arranged between the height adjustment motor 210 and the gear assembly 220. The connecting shaft 232 is configured to be movably connected with the height adjustment motor 210 to achieve a separation and engagement of the height adjustment motor 210 and the gear assembly 220. The cutter motor assembly 250 is installed in the main body 400, and the cutter motor assembly 250 includes an adjustment rod 251, the adjustment rod 251 is provided with an external thread, the gear assembly 220 is provided with an internal thread, and the gear assembly 220 is engaged with the adjustment rod 251. When the gear assembly 220 is driven to rotate, the adjustment rod 251 moves under a drive of the gear assembly 220, and a moving direction of the adjustment rod 251 will be changed when a rotating direction of the gear assembly 220 is changed. The adjustment rod 251 is provided with an end part 2511, and the end part 2511 can abut against the gear assembly 220. When the height adjustment rod 251 and the gear assembly 220 abut against each other at the end part, the gear assembly 220 cannot rotate. At this time, the height adjustment motor 210 is separated from the connecting shaft 232, so that the height adjustment motor 210 rotates relative to the gear assembly 220, thereby preventing the height adjustment motor 210 from being damaged due to increased driving resistance.

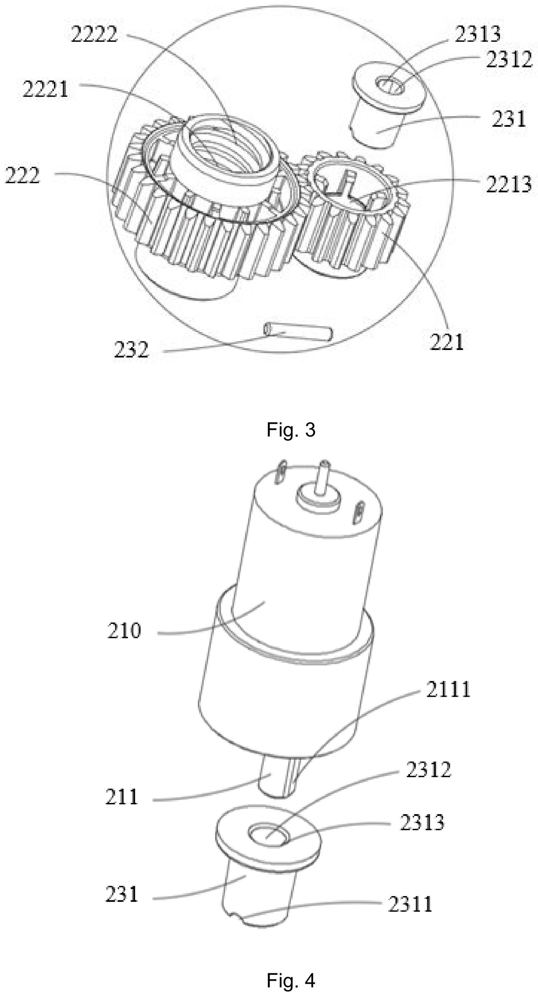

Combined with FIG. 4, the height adjustment motor 210 includes an output shaft 211 and a shaft sleeve 231 sleeved on the output shaft 211. The shaft sleeve 231 rotates synchronously with the output shaft 211. The shaft sleeve 231 is engaged with the gear assembly 220 through the connecting shaft 232, so that the height adjustment motor 210 drives the gear assembly 220 to rotate, thereby driving the adjustment rod 251 to be lifted and lowered reciprocally, thereby driving the working device 300 to be lifted and lowered reciprocally, so as to adjust the height of the working device 300 relative to the working surface. When the shaft sleeve 231 is separated from the connecting shaft 232, the output shaft 211 and the shaft sleeve 231 are idle under a drive of the height adjustment motor 210, and the gear assembly 220 remains stationary to maintain the height between the working device 300 and the working surface.

In order to prevent the adjustment rod 251 from separating from the gear assembly 220, the end parts 2511 are arranged at two ends of the adjustment rod 251. The gear assembly 220 drives the adjustment rod 251 to be lifted and lowered reciprocally. When the end parts 2511 abuts against the gear assembly 220, the adjustment rod 251 will not slide out of the gear assembly 220 due to a restriction of the end parts 2511. At the same time, since the end parts 2511 abuts against the gear assembly 220, the gear assembly 220 stops rotating, the shaft sleeve 231 is separated from the connecting shaft 232, and the height adjustment motor 210 idles, thereby avoiding damage caused by excessive load on the height adjustment motor 210 and extending a duration life of the height adjustment device 200.

The mower 100 includes a controller, and the controller can monitor a current change of the height adjustment motor 210 and control the height adjustment motor 210 to stop rotating or rotate in a reverse direction. The controller may be electrically connected with a circuit board that supplies power to the height adjustment motor 210 to monitor a current of the height adjustment motor 210 and control the height adjustment motor 210 to stop rotating or rotate in the reverse direction. The controller may also be directly electrically connected with the height adjustment motor 210 to monitor the current of the height adjustment motor 210 and control the height adjustment motor 210, which is not limited here.

Please refer to FIG. 2 through FIG. 10. The gear assembly 220 includes a first gear 221 and a connecting part 2211 arranged on an axis of the first gear 221. The clutch assembly 230 includes a connecting shaft 232 movably connected with the connecting part 2211. In an embodiment, the connecting part 2211 extends from the first gear 221 in a direction away from the height adjustment motor 210. The connecting part 2211 is provided with a transmission hole 2213 for accommodating the shaft sleeve 231. The connecting shaft 232 is arranged at a bottom of the transmission hole 2213. The shaft sleeve 231 extends into the transmission hole 2213 and can abut against or separate from the connecting shaft 232, so that the shaft sleeve 231 can drive the connecting part 2211 to rotate or idle, thereby realizing a separation or engagement between the height adjustment motor 210 and the gear assembly 220.

Please refer to FIG. 2 through FIG. 10. The shaft sleeve 231 is provided with a first limiting groove 2311. A second limiting groove 2212 is arranged on the connecting part 2211. The first limiting groove 2311 and the second limiting groove 2212 partially overlap in a height direction. The connecting shaft 232 can move up and down in the second limiting groove 2212. When the connecting shaft 232 is accommodated in an overlapping part of the first limiting groove 2311 and the second limiting groove 2212, the shaft sleeve 231 engages with the first gear 221. When the connecting shaft 232 moves out of the overlapping part of the first limiting groove 2311 and the second limiting groove 2212, the shaft sleeve 231 is separated from the first gear 221.

In an embodiment, the first limiting groove 2311 is concave from an end surface of the shaft sleeve 231 along an axis direction of the first gear 221, the first limiting groove 2311 is semicircular arc-shaped, and a concave direction of the second limiting groove 2212 is the same as a concave direction of the first limiting groove 2311, which means that the second limiting groove 2212 is concave from a side of the connecting part 2211 away from the height adjustment motor 210 toward the height adjustment motor 210, and the second limiting groove 2212 is communicated with the transmission hole 2213. The shaft sleeve 231 is accommodated in the transmission hole 2213, the first limiting groove 2311 can overlap with part of the second limiting groove 2212, and the connecting shaft 232 is cylindrical shaped matching the first limiting groove 2311, and can move in the second limiting groove 2212 along the axis direction of the first gear 221.

Please refer to FIG. 4. The shaft sleeve 231 is provided with a shaft hole 2312. A first limiting surface 2313 is arranged in the shaft hole 2312. A size of the shaft hole 2312 is the same as a size of the output shaft 211, so that the output shaft 211 can extend into the shaft hole 2312 to drive the shaft sleeve 231 to rotate. A second limiting surface 2111 is arranged on an outer wall surface of the output shaft 211. When the output shaft 211 is accommodated in the shaft hole 2312, the first limiting surface 2313 abuts against the second limiting surface 2111 to prevent the output shaft 211 from rotating relative to the shaft sleeve 231 in the shaft hole 2312. Specifically, the first limiting surface 2313 prevents the shaft hole 2312 from forming a complete circle, and the second limiting surface 2111 also prevents the output shaft 211 from forming a complete circle, so that the output shaft 211 and the shaft sleeve 231 can achieve a synchronous rotation.

Please refer to FIG. 2 through FIG. 10. In this embodiment, the output shaft 211 is provided with the shaft sleeve 231, and the output shaft 211 is engaged or separated with the connecting shaft 232 through the shaft sleeve 231 to realize that the height adjustment motor 210 drives the gear assembly 220 to rotate or does not drive the gear assembly 220 to rotate. The first limiting groove 2311 is in a semicircular arc shape, and the connecting shaft 232 is in a cylindrical shape. Of course, in other embodiments, the shaft sleeve 231 may not be arranged on the output shaft 211, and the first limiting groove 2311 may be directly arranged at a tail end of the output shaft 211. The first limiting groove 2311 may be in a triangle, a quarter arc shape, etc., and the connecting shaft 232 may be designed in other shapes such as a square. As long as the connecting shaft 232 can be partially inserted into the first limiting groove 2311, so that the output shaft 211 can drive the first gear 221 to rotate, and the connecting shaft 232 can also slide out of the first limiting groove 2311, a shape of the connecting shaft 232 is not limited here.

Please refer to FIG. 2 through FIG. 10. In this embodiment, the first limiting groove 2311 and the second limiting groove 2212 are both opened in an axial direction of the first gear 221. Of course, in other embodiments, the first limiting groove 2311 may be arranged on a side surface of the shaft sleeve 231 or the output shaft 211, and the second limiting groove 2212 is correspondingly arranged on a side surface of the connecting part 2211.The first limiting groove 2311 overlaps with part of the second limiting groove 2212 to achieve a separation and engagement between the height adjustment motor 210 and the gear assembly 220, which is not limited here.

Please refer to FIG. 2 through FIG. 10. The clutch assembly 230 includes an elastic component 233. The elastic component 233 is arranged between the connecting shaft 232 and the outer frame 240 to keep the connecting shaft 232 accommodated in an overlapping part of the first limiting groove 2311 and the second limiting groove 2212. In an embodiment, an abutment groove 244 is arranged on the outer frame 240, and the abutment groove 244 is arranged opposite to the connecting part 2211 and is concave in a direction away from the connecting part 2211. An accommodating groove 2214 is arranged on the first gear 221, and the accommodating groove 2214 is arranged around the connecting part 2211. In the axial direction of the first gear 221, a depth of the accommodating groove 2214 is not less than a depth of the second limiting groove 2212, so that the second limiting groove 2212 can be communicated with the accommodating groove 2214. A middle position of the connecting shaft 232 is accommodated in the second limiting groove 2212, and the end parts 2511 on two sides are accommodated in the accommodating groove 2214.

Please refer to FIG. 2 through FIG. 10. A first end of the elastic component 233 is accommodated in the abutment groove 244, and a second end of the elastic component 233 is accommodated in the accommodating groove 2214 and abuts against the connecting shaft 232. With this arrangement, the connecting shaft 232 is arranged at a bottom of the second limiting groove 2212 under an elastic force of the elastic component 233, and is partially accommodated in the first limiting groove 2311, so that the output shaft 211 can drive the first gear 221 to rotate.

Please refer to FIG. 2 through FIG. 10. When the first gear 221 stops rotating under a restriction of the cutter motor assembly 250, the output shaft 211 pushes the connecting shaft 232 through a groove wall of the first limiting groove 2311, so that the connecting shaft 232 moves in a direction away from the output shaft 211, and at the same time squeezes the elastic component 233 to achieve the separation of the height adjustment motor 210 from the gear assembly 220. When the output shaft 211 rotates until the first limiting groove 2311 overlaps with the second limiting groove 2212, the connecting shaft 232 moves toward the height adjustment motor 210 under a drive of an elastic force of the elastic component 233, so as to enter the overlapping part of the first limiting groove 2311 and the second limiting groove 2212 and achieve the engagement of the height adjustment motor 210 with the gear assembly 220.

Please refer to FIG. 2 through FIG. 10. In this embodiment, the elastic component 233 is a spring, and the abutment groove 244 for accommodating the spring is arranged on the outer frame 240. The spring is accommodated in the abutment groove 244 and fixedly connected with the outer frame 240. Of course, in other embodiments, the elastic component 233 may also be other elastic components such as rubber products, and the abutment groove 244 may not be arranged on the outer frame 240. In this case, the elastic component 233 is directly connected with the outer frame 240, or an abutment post is arranged on the outer frame 240, and the elastic component 233 is sleeved on an outer side of the abutment post and connected with the abutment post, which is not limited here at this time.

Please refer to FIG. 2 and FIG. 3. The gear assembly 220 includes a second gear 222 meshed with the first gear 221, the second gear 222 is provided with a first perforation hole 2221, the adjustment rod 251 is accommodated in the first perforation hole 2221 and is capable of being lifted and lowered reciprocally in the first perforation hole 2221. In an embodiment, the second gear 222 is arranged side by side with the first gear 221, and gear racks are arranged on the first gear 221 and the second gear 222. The first gear 221 and the second gear 222 are engaged through the gear racks to enable the first gear 221 to drive the second gear 222 to rotate. A number of gear racks on the first gear 221 is less than a number of gear racks on the second gear 222 to increase a driving force of the second gear 222. Of course, in other embodiments, the number of gear racks on the first gear 221 may be equal to or greater than the number of gear racks on the second gear 222, which is not limited here.

Combined with FIG. 7, an internal thread 2222 is arranged on an inner wall surface of the first perforation hole 2221, and an external thread 513 is arranged on an outer wall surface of the adjustment rod 251, the external thread 513 is engaged with the internal thread 2222, so that when the second gear 222 rotates, the adjustment rod 251 can be driven to be lifted and lowered reciprocally. In an embodiment, the second gear 222 is threadedly connected with the adjustment rod 251, and the adjustment rod 251 is driven to be lifted and lowered reciprocally by the thread. The adjustment rod 251 is driven to be lifted and lowered reciprocally by the second gear 222. The cutter motor assembly 250 is connected with the working device 300, and then drives the working device 300 to be lifted and lowered reciprocally to change a size between the working device 300 and the working surface. This arrangement allows the adjustment rod 251 to move in the vertical direction without rotating.

The gear assembly 220 further includes side plates arranged on upper and lower sides of the first gear 221 and upper and lower sides of the second gear 222 and bearings arranged on the side plates. The gear assembly 220 is fixed to the outer frame 240 through the side plates, and the second gear 222 is connected with the side plates through the bearings to fix the gear assembly 220 on the outer frame 240 to prevent the gear assembly 220 from shaking during rotation.

The cutter motor assembly 250 includes a fixing plate 252 connected with the end part 2511 and an adjustment body 254 that accommodates the working device 300. The adjustment rod 251 is fixedly connected with the adjustment body 254 through the fixing plate 252, so that the adjustment rod 251 can drive the adjustment body 254 to move. The adjustment rod 251 moves under a drive of the internal thread 2222 until the fixing plate 252 abuts against the gear assembly 220 to limit a rotation of the gear assembly 220. In an embodiment, there are two fixing plates 252, and the two fixing plates 252 are respectively arranged at two ends of the adjustment rod 251.

The external thread 2512 on the adjustment rod 251 is distributed between the two fixing plates 252, and a tail end of the external thread 2512 is arranged beside the fixing plate 252, so that when the adjustment rod 251 moves, the fixing plate 252 can abut against the second gear 222 to limit a rotation of the second gear 222. Of course, in other embodiments, there may also be a certain distance between the tail end of the external thread 2512 and the fixing plate 252, and the distance is less than a thickness of the second gear 222, so that when the second gear 222 abuts against the fixing plate 252, part of the internal thread 2222 of the second gear 222 engages with part of the external thread 2512 on the adjustment rod 251. Or a protruding block may also be arranged at the tail end of the external thread 2512 of the adjustment rod 251, and the protruding block abuts against the tail end of the internal thread 2222 to limit the rotation of the second gear 222. As long as the rotation of the second gear 222 may be limited by the adjustment rod 251, there is no limitation here.

Please refer to FIG. 7 and FIG. 8. The cutter motor assembly 250 includes a positioning component 253, and an arrangement direction of the positioning component 253 is the same as a lifting direction of the adjustment rod 251. The mower 100 includes a sensing device 260, and the sensing device 260 is used to sense a height change of the cutter motor assembly 250 and is communicated with the controller. The sensing device 260 includes a plurality of positioning teeth 2531 and a sensing groove 261 distributed on the positioning component 253, and at least part of the positioning teeth 2531 extend into the sensing groove 261. When the cutter motor assembly 250 is lifted and lowered reciprocally, the positioning teeth 2531 move in the sensing groove 261, and the height change is sensed by calculating a number of positioning teeth 2531 passing through the sensing groove 261. In an embodiment, the positioning component 253 is arranged on an outer wall surface of the adjustment body 254, and the plurality of positioning teeth 2531 is arranged in a zigzag shape on the positioning component 253. The sensing device 260 is arranged between the outer frame 240 and the adjustment body 254 and is connected with the outer frame 240. The sensing groove 261 is arranged on a side of the sensing device 260 away from the outer frame 240. When the cutter motor assembly 250 moves up and down, the positioning teeth 2531 move in the sensing groove 261. The sensing device 260 detects an amount of movement of the positioning teeth 2531 and then detects the height of an up and down movement of the cutter motor assembly 250. The sensing device 260 is a grating. A first side wall of the sensing groove 261 emits light, and a second side wall of the sensing groove 261 receives light. When the positioning teeth 2531 are located in the sensing groove 261, the light is blocked by the positioning teeth 2531. When a gap between two adjacent positioning teeth 2531 is located in the sensing groove 261, the light is not blocked. This method is used to detect the number of positioning teeth 2531 passing through the sensing groove 261, and then determine a lifting height or lowering height of the cutter motor assembly 250.

In this embodiment, the working device 300 is a cutter assembly. A specific structure and connection method of the cutter assembly may be set according to a conventional technology and are not limited here.

The disclosure further discloses a height adjustment method for the mower, the mower has a same or similar structure as the mower described in the above embodiment, wherein, the controller is configured to:
control the height adjustment motor 210 to rotate so as to drive the cutter motor assembly 250 to be lifted and lowered;
monitor a current of the height adjustment motor 210; and
when the current of the height adjustment motor 210 fluctuates periodically, control the height adjustment motor 210 to stop or turn.

In an embodiment, the height adjustment method includes: the height adjustment motor 210 driving the gear assembly 220 to rotate through the clutch assembly 230, and the gear assembly 220 driving the adjustment rod 251 to be lifted and lowered.

In an embodiment, under an action of the elastic component 233, the connecting shaft 232 is accommodated in the overlapping part of the first limiting groove 2311 and the second limiting groove 2212. The output shaft 211 is connected with the first gear 221 through the shaft sleeve 231 and the connecting shaft 232. When the height adjustment motor 210 drives the output shaft 211 to rotate, the output shaft 211 drives the shaft sleeve 231 to rotate, and then drives the first gear 221 and the second gear 222 to rotate through the connecting shaft 232. The rotation of the second gear 222 causes the internal thread arranged in the first perforation hole 2221 to rotate, thereby driving the adjustment rod 251 to move relative to the working surface, thereby changing the distance between the working device 300 and the working surface.

When the end part 2511 of the adjustment rod 251 contacts the gear assembly 220, the gear assembly 220 stops rotating and the clutch assembly 230 is disengaged, which enables the height adjustment motor 210 to idle.

In an embodiment, when the gear assembly 220 stops rotating, the connecting shaft 232 slides out of the first limiting groove 2311 under a push of the output shaft 211, and at the same time the elastic component 233 is squeezed, so that the output shaft 211 is separated from the gear assembly 220, and the height adjustment motor 210 drives the output shaft 211 to idle. At this time, the gear assembly 220 and the adjustment rod 251 remain stationary. Wherein, the output shaft 211 pushes the connecting shaft 232 to slide out of the first limiting groove 2311, so that the first limiting groove 2311 intersects with the second limiting groove 2212. When the first limiting groove 2311 rotates to partially overlap with the second limiting groove 2212, the connecting shaft 232 enters the first limiting groove 2311 under a push of the elastic component 233, and is then pushed out of the limiting groove again by the output shaft 211. This is repeated, so that the output shaft 211 rotates relative to the gear assembly 220. Of course, if the output shaft 211 reaches a certain rotating speed, the connecting shaft 232 will not enter the first limiting groove 2311 under the push of the elastic component 233.

When the controller detects that the current of the height adjustment motor 210 changes, the controller controls the height adjustment motor 210 to stop rotating or rotate in a reverse direction.

When the controller controls the height adjustment motor 210 to rotate in the reverse direction, the elastic component 233 releases its elastic force, which enables the connecting shaft 232 to enter the first limiting groove 2311, and the output shaft 211 engages with the gear assembly 220, driving the gear assembly 220 to rotate, and enabling the adjustment rod 251 to be lifted or lowered in an opposite direction.

When the controller controls the height adjustment motor 210 to stop rotating, which means stopping supplying power to the height adjustment motor 210, the height adjustment motor 210 will rotate under an action of inertia. At this time, a rotating speed of the output shaft 211 decreases. When the connecting shaft 232 enters the first limiting groove 2311 under the push of the elastic component 233, and a force of a rotation of the output shaft 211 cannot push the connecting shaft 232 out of the first limiting groove 2311, the output shaft 211 stops rotating.

In an embodiment, the current of the height adjustment motor 210 driving the gear assembly 220 to rotate is different from the current of the height adjustment motor 210 when it is idling. When the controller detects that the current of the height adjustment motor 210 changes, the controller controls the height adjustment motor 210 to stop rotating or rotate in the reverse direction. Wherein, when the connecting shaft 232 slides out of the first limiting groove 2311 and the height adjustment motor 210 rotates at a high speed, the connecting shaft 232 cannot enter the first limiting groove 2311 under the action of the elastic component 233. At this time, the current of the height adjustment motor 210 is less than the current when the height adjustment motor 210 drives the gear assembly 220 to rotate, and a current fluctuation is small. When the connecting shaft 232 slides out of the first limiting groove 2311 and a rotating speed of the height adjustment motor 210 is low, the connecting shaft 232 repeats between entering the first limiting groove 2311 and sliding out of the first limiting groove 2311, at this time, the current of the height adjustment motor 210 fluctuates periodically, which may be greater than the current when driving the gear assembly 220 to rotate, or may be less than the current when driving the gear assembly 220 to rotate.

The controller monitors the current changes of the height adjustment motor 210. If the current becomes smaller and the current fluctuation is small, or the current changes periodically, it may be determined that the height adjustment motor 210 does not drive the gear assembly 220 to rotate. The height adjustment motor 210 may be controlled to stop rotating or rotate in the reverse direction according to an actual condition, thereby avoiding the height adjustment motor 210 from continuously idling and causing waste of electricity.

When within a preset period of time, for example, within 5 seconds, the controller receives a signal indicating that the current of the height adjustment motor is not 0, but a height signal transmitted by the sensing device 260 does not change (which means that the height change of the cutter motor assembly 250 is 0), it is determined that the height adjustment motor 210 is idling, which means that the adjustment rod 251 of the cutter motor assembly 250 is abuts against the gear assembly 220, and a maximum or minimum value of an adjustment height is reached. A maximum height or minimum height may be determined according to a rotating direction of the height adjustment motor 210. At this time, the controller controls the height adjustment motor 210 to stop rotating.

In an embodiment of, the height adjustment method further includes following operations.

The number of positioning teeth 2531 corresponding to a specified height is calculated.

The height adjustment motor 210 is reversely driven.

The height adjustment motor is stopped when detecting that the number of positioning teeth 2531 passing through the sensing groove 261 is achieved.

In this embodiment, the sensing device 260 is communicated with the controller, so that the sensing device 260 can transmit the number of positioning teeth 2531 passing through the sensing groove 261 to the controller. When a certain number is reached, the controller controls the height adjustment motor 210 to stop rotating. In an embodiment, the end part 2511 of the adjustment rod 251 is defined as a zero point when it abuts against the gear assembly 220. When a user needs to adjust the working device 300 to a specified height, the user inputs specified height data between the working device 300 and the working surface, and the controller matches the specified height with the number of positioning teeth 2531, which means that when this number of positioning teeth 2531 passes through the sensing groove 261, the height between the working device 300 and the working surface is the specified height.

The controller controls the height adjustment motor 210 to rotate to drive the adjustment rod 251 to the zero point. At this time, the sensing groove 261 is located at a tail end of the positioning component 253. Then the controller controls the height adjustment motor 210 to rotate in the reverse rotation. The cutter motor assembly 250 moves in a downward or upward direction under the drive of the height adjustment motor 210. The positioning teeth 2531 move in the sensing groove 261. The sensing groove 261 detects the number of positioning teeth 2531 passing through the sensing groove 261. When the number of positioning teeth 2531 passing through the sensing groove 261 is equal to the number of positioning teeth 2531 corresponding to the specified height, the controller controls the height adjustment motor 210 to stop rotating, so that the working device 300 can stay at this height to work.

In an embodiment, each time the working device 300 is adjusted to the specified height, the height adjustment motor 210 needs to drive the adjustment rod 251 to the zero point and then rotate in the reverse direction so that the working device 300 reaches the specified height to achieve a precise positioning of the working device 300.

In summary, the height adjustment device 200 of the disclosure drives the gear assembly 220 to rotate through the height adjustment motor 210, and then drives the adjustment rod 251 to move, thereby realizing an automatic adjustment of the height between the working device 300 and the working surface, and improving user experience. Through arranging the clutch assembly 230 between the gear assembly 220 and the height adjustment motor 210, when the end part 2511 of the adjustment rod 251 abuts against the gear assembly 220, the gear assembly 220 and the height adjustment motor 210 are separated by the clutch device, which avoids damage caused by an overload of the height adjustment motor 210, and extending a duration life of the height adjustment device 200. The current change of the height adjustment motor 210 is monitored through the controller to determine whether the height adjustment motor 210 drives the gear assembly 220 to rotate, and then controls the height adjustment motor 210 to stop rotating or rotate in the reverse rotation, thereby avoiding the height adjustment motor 210 idling for a long time that may cause the waste of electricity.

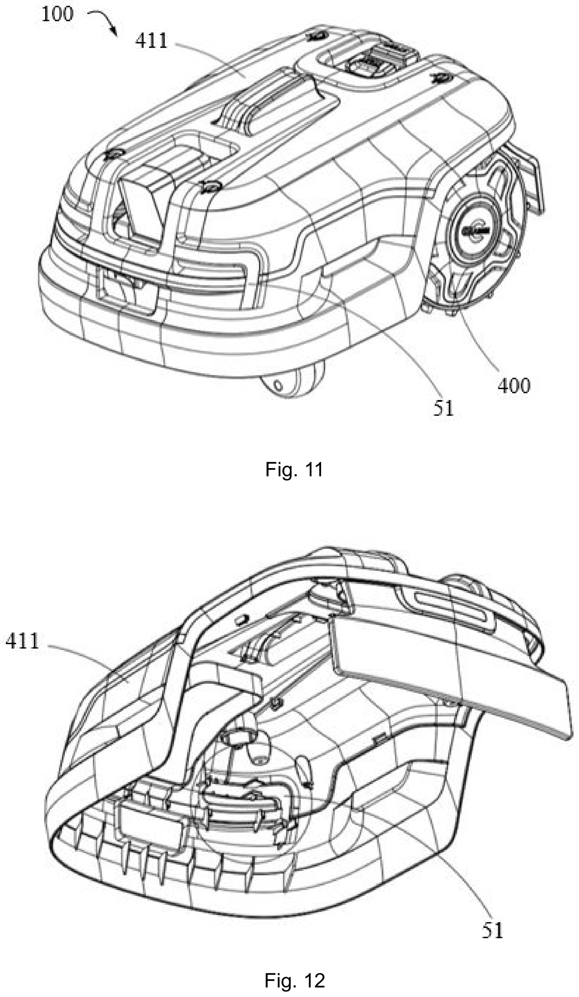

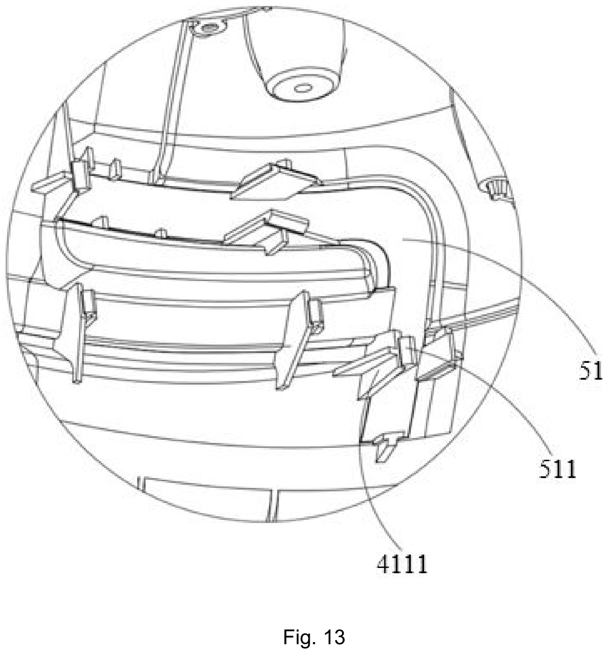

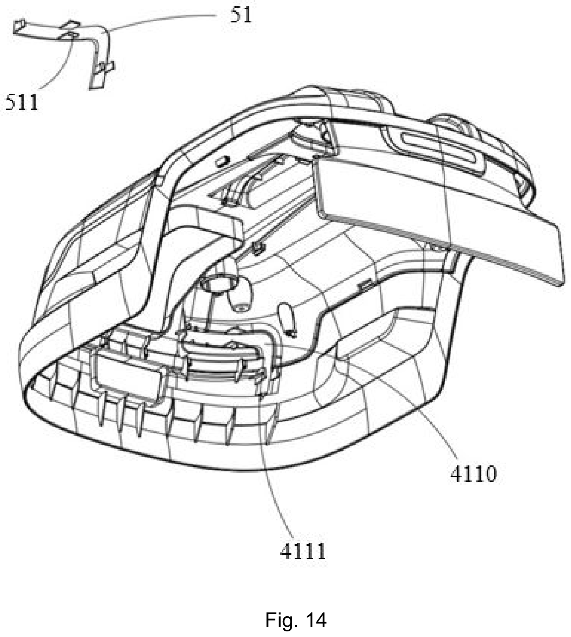

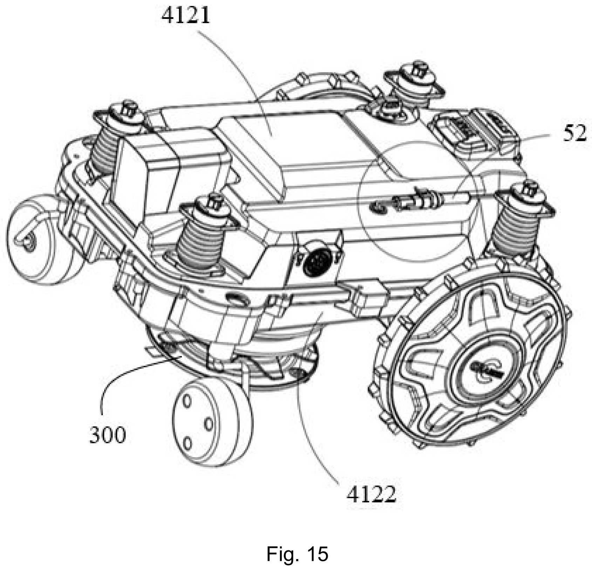

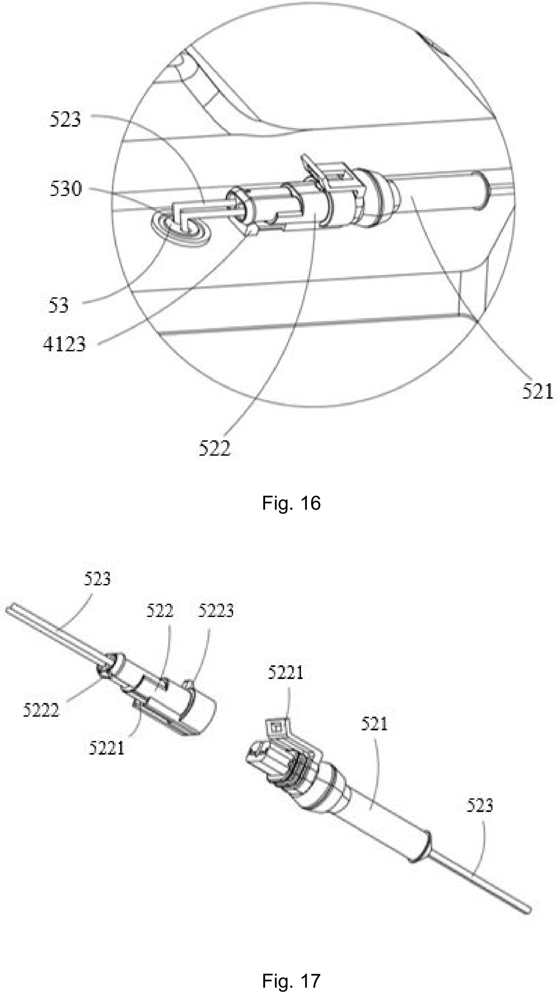

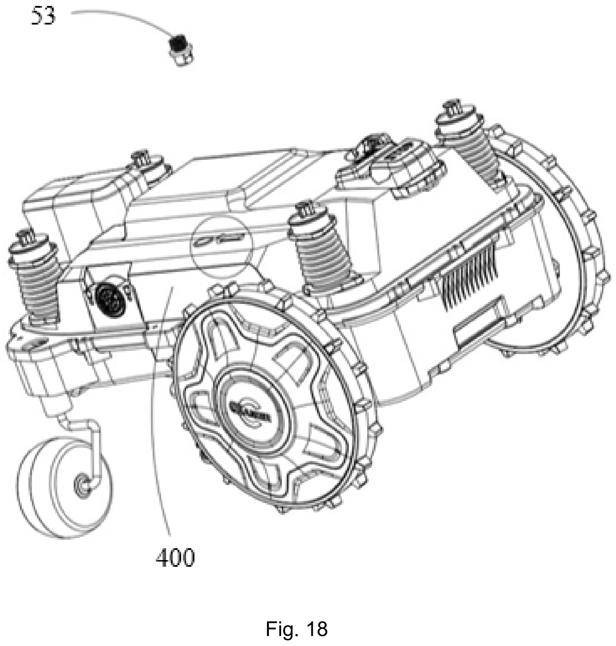

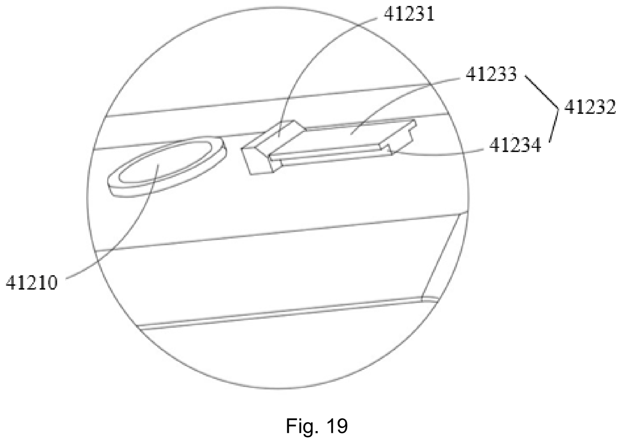

Please refer to FIG. 11 through FIG. 19. It is further understandable that, for conventional robotic mowers, a light source is usually arranged on a surface to provide lighting. While a connection between the light source and a control system or power supply modules inside the robot mower often relies on a conductive wire. This also means that when replacing the light source, due to the connected conductive wires, it is usually necessary to disassemble a housing inside the robot mower and expose the control system or power supply modules to complete a replacement of the light source, which is undoubtedly cumbersome. Therefore, the disclosure further provides the mower to solve a problem of needing to disassemble an internal housing of the robotic mower when replacing a light source lamp, which enables it to be more convenient to replace the light source lamp. The mower 100 includes the main body 400 and an outer housing 411 detachably connected with the main body 400. A lamp 51 is arranged on an outer surface of the outer housing 411. The lamp 51 is fixedly connected with the outer housing 411 and exposed outside the outer housing 411. The lamp 51 is a decorative lamp, which can provide lighting while enabling the robotic mower 100 to be more beautiful as a whole. The lamp 51 can emit one or more of white light, blue light and red light. The lamp 51 can be combined with the control system of the robotic mower 100 to switch between white light, blue light and red light under specific conditions. For example, when the robotic mower 100 is started, it first maintains a white breathing light state for 1 to 2 minutes, and then works normally in a white solid light state. When the power is less than 20%, it flashes blue and returns to a charging station to charge in this state. When charging, it is in a blue solid light state, and when fully charged, it is in a white state, and then returns to a lawn in a white solid light state to continue working. When the robotic mower 100 malfunctions, the red light will flash for 1 minute and then remain solid red. Users or maintenance personnel may view a specific fault through an APP or background. These may be adjusted according to an actual situation and there are no restrictions on this.

Please refer to FIG. 11 through FIG. 12. In a moving direction of the robotic mower 100, the lamp 51 is arranged at a front end and/or a rear end and/or a side end of the outer housing 411. That is to say, a position of the lamp 51 is not limited, and the lamp 51 only needs to be arranged on the outer surface of the outer housing 411, thereby ensuring lighting while enabling the robotic mower 100 to be more beautiful.

Please refer to FIG. 11, FIG. 13 and FIG. 14. In this embodiment, the outer housing 411 is provided with in installation hole 4110, and the lamp 51 is detachably fixed in the installation hole 4110. In an embodiment, the lamp 51 is provided with a clamping component 511. The outer housing 411 is correspondingly provided with a supporting component 4111 around the installation hole 110. The clamping component 511 and the supporting component 4111 is matched with each other to achieve a clamping and fixing between the lamp 51 and the outer housing 411. Of course, in other embodiments, an installation groove may also be arranged around the installation hole 4110 so that the lamp 51 is clamped into the installation groove to achieve a fixed connection between the lamp 51 and the outer housing 411. There is no limitation to this, and it is only necessary to ensure that the lamp 51 is detachable. The outer housing 411 is an anti-collision outer housing to avoid damage in small collisions, which improves durability, and enhances the user experience.

Please refer to FIG. 12, FIG. 15 and FIG. 17. The robotic mower 100 further includes a cable assembly 52 connected between the lamp 51 and the main body 400. The cable assembly 52 includes a first connecting part 521 and a second connecting part 522 that are detachably connected with each other. The first connecting part 521 is fixedly connected with the lamp 51 through a cable 523, and the second connecting part 522 is fixedly connected with the main body 400 through another cable 523 to achieve an electrical connection between the lamp 51 and the main body 400. In this way, the lamp can be replaced only by simply disassembling the first connecting part 521 and the second connecting part 522 without releasing a fixed connection between the cable 523 and the main body 400. The operation is simple and practical. The first connecting part 521 and the second connecting part 522 are connection terminals. The first connecting part 521 and the second connecting part 522 are respectively configured as a male connection terminal and a female connection terminal, so that the first connecting part 521 and the second connecting part 522 are detachably connected with each other. In an embodiment, the first connecting part 521 can be partially accommodated in the second connecting part 522, a buckle 5211 is arranged on the first connecting part 521, and a corresponding clamping block 5223 is arranged on the second connecting part 522. When the first connecting part 521 is partially accommodated in the second connecting part 522, the clamping block 5223 passes through the buckle 5211 to realize a clamping fixation between the first connecting part 521 and the second connecting part 522.

The first connecting part 521 and the second connecting part 522 are both accommodated between the outer housing 411 and the main body 400, and are detachably fixed on an outer wall surface of the main body 400. In this embodiment, the second connecting part 522 is detachably connected with the outer wall surface of the main body 400, and the first connecting part 521 is detachably connected with the second connecting part 522 and is fixedly connected with the main body 400 through the second connecting part 522. In this way, when replacing the lamp, it is only necessary to remove the outer housing 411 and replace the lamp 51 through plugging and unplugging the first connecting part 521.

In an embodiment, the main body 400 includes a chassis 4122 and a casing 4121 covering the chassis 4122. The casing 4121 is further provided with a plug-in part 4123, and a plug-in groove 5221 is correspondingly arranged on the second connecting part 522. The plug-in part 4123 is accommodated in the plug-in groove 5221 to realize a detachable connection between the casing 4121 and the second connecting part 522.

Please refer to FIG. 11 through FIG. 19. In this embodiment, the plug-in part 4123 includes a boss 41231 and a plug-in component 41232 that perpendicular to each other. The plug-in component 41232 is roughly T-shaped and includes a plug-in post 41233 accommodated in the plug-in groove 5221 and a connecting post 41234 connecting the plug-in post 41233 with the casing 4121. The boss 41231 abuts against one end of the second connecting part 522. The T-shaped plug-in component enables it to be easier to plug and unplug the first connecting part 521.

Please refer to FIG. 11 through FIG. 19. A buckling part 5222 is arranged at one end of the second connecting part 522 that abuts against the boss 41231. When the plug-in part 4123 is connected with the second connecting part 522, the buckling part 5222 is buckled on a side of the boss 41231 away from the plug-in component 41232. The boss 41231 is higher than the plug-in component 41232. When the plug-in groove 5221 slides a certain distance along the plug-in post 41233, the second connecting part 522 abuts against the boss 41231 and stops the second connecting part 522 from sliding further. The buckling part 522 is matched with the boss 41231 to limit the second connecting part 522 on the plug-in component 41232, thereby preventing the second connecting part 522 from falling off.

Please refer to FIG. 11 through FIG. 19. The casing 4121 is provided with a second perforation hole 41210, and the cable 523 corresponding to the second connecting part 522 passes through the second perforation hole 41210 and is fixedly connected with the main body 400. Generally speaking, the control system and the power module are both fixed inside the main body 400, which means between the chassis 4122 and the casing 4121. An arrangement of the second perforation hole 41210 enables a connection of the cable 523 to be more convenient. The cable 523 corresponding to the second connecting part 522 needs to be connected with an inside of the main body 400. In a traditional robotic mower, the lamp 51 is connected with the main body 400 through the cable 523. When replacing the lamp 51, it is necessary to first remove the casing 4121 before removing the cable 523 and completing a replacement of the lamp 51. This is undoubtedly cumbersome. Therefore, in the disclosure, the lamp 51 may be replaced through simply plugging and unplugging the first connecting part 521 without disassembling the casing 4121, which enables the replacement of the lamp 51 to be more convenient. In this embodiment, the second perforation hole 41210 accommodates a lead line 53, and the lead line 53 is provided with a lead hole 530 for the cable 523 to pass through. The lead line 53 substantially covers the second perforation hole 41210, so that the entire casing4121 is in a closed state.

In summary, the robotic mower 100 of the disclosure arranges the first connecting part 521 detachably connected with the second connecting part 522 between the lamp 61 and the main body 400, so that the lamp 51 can be replaced by simply disassembling the first connecting part 521 and the second connecting part 522 without releasing a fixed connection between the cable 523 and the main body 400. The operation is simple and practical.

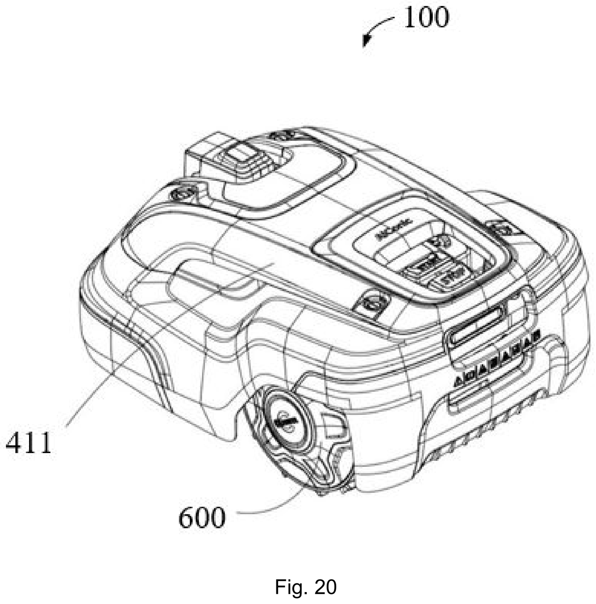

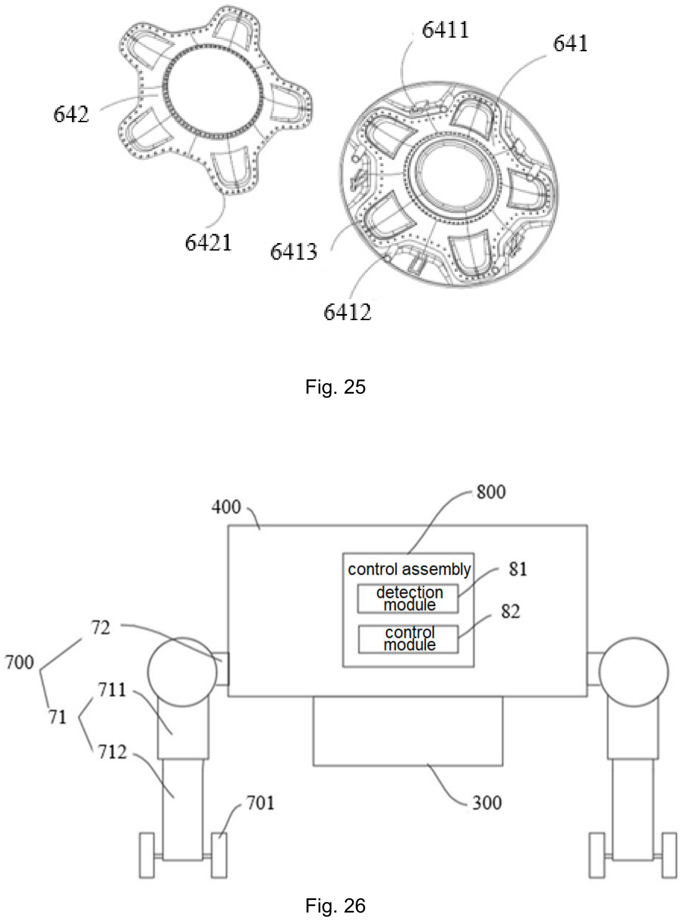

Please refer to FIG. 20 and FIG. 25. The disclosure further provides the mower. The mower 100 includes the outer housing 411, the chassis 4122, a driving assembly 600 and the working device 300. The working device 300 is a cutting assembly. Wherein, the driving assembly 600 is arranged on two sides of the chassis 4122. The driving assembly 600 includes a walking motor 62 and a walking wheel 61 detachably assembled on the walking motor 62. There are at least two driving assemblies 600 that are relatively independent. In other words, the two driving assemblies 600 are arranged on the two sides of the chassis 4122, and the two driving assemblies 600 are independent of each other. Different driving speeds of the two driving assemblies 600 can reduce turning radius of the mower 100 and reduce wear of a tire. The walking motor 62 is a hub motor, and the tire is sleeved on an outer side of the hub motor. Through separating the hub from the tire, a diversity of tire usage is improved. At the same time, tires are prone to wear after long-term use. An independent design of the tire is more convenient when disassembling, which can improve efficiency of tire replacement, reduce user costs, and significantly improve the user experience.

Please refer to FIG. 20 and FIG. 25. The outer housing 411 covers on the chassis 4122 and is fixedly connected with the chassis 4122. An orthographic projection of the outer housing 411 on a horizontal plane is defined as a first projection, and orthographic projections of the chassis 4122 and two driving assemblies 600 on the horizontal plane is defined as a second projection. When the mower 100 is viewed from above, the first projection covers the second projection. In other words, the outer housing 411 can cover the chassis 4122 and the driving assembly 600 as a whole and completely cover the chassis 4122 and the driving assembly 600.

In an embodiment, the chassis 4122 is rectangular and includes a first side wall 413 and a second side wall 414 extending in a moving direction of the mower 100. The first side wall 413 and the second side wall 414 are both provided with a perforation hole 415. The outer housing 411 is also rectangular and includes a third side wall 4112 and a fourth side wall 4113 parallel to the first side wall 413 and the second side wall 414, a first cavity 4114 is formed between the third side wall 4112 and the first side wall 413, another first cavity 4114 is also formed between the fourth side wall 4113 and the second side wall 414, and the driving assembly 600 is accommodated in the first cavities 4114.

A distance between the third side wall 4112 and the first side wall 413 is greater than or equal to a thickness of the walking wheel 61, and the distance between the third side wall 4112 and the first side wall 413 is equal to a distance between the fourth side wall 4113 and the second side wall 414.

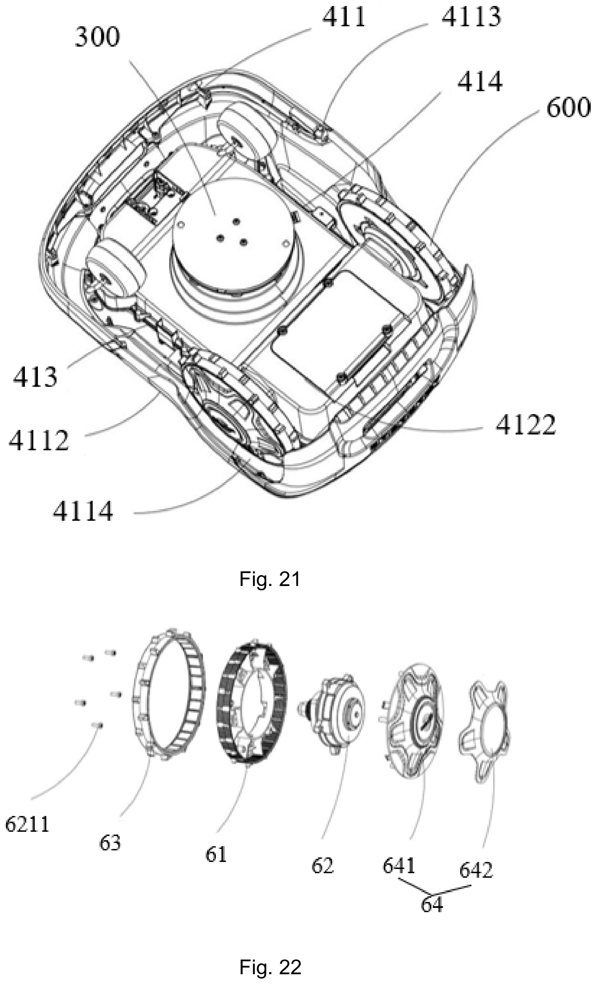

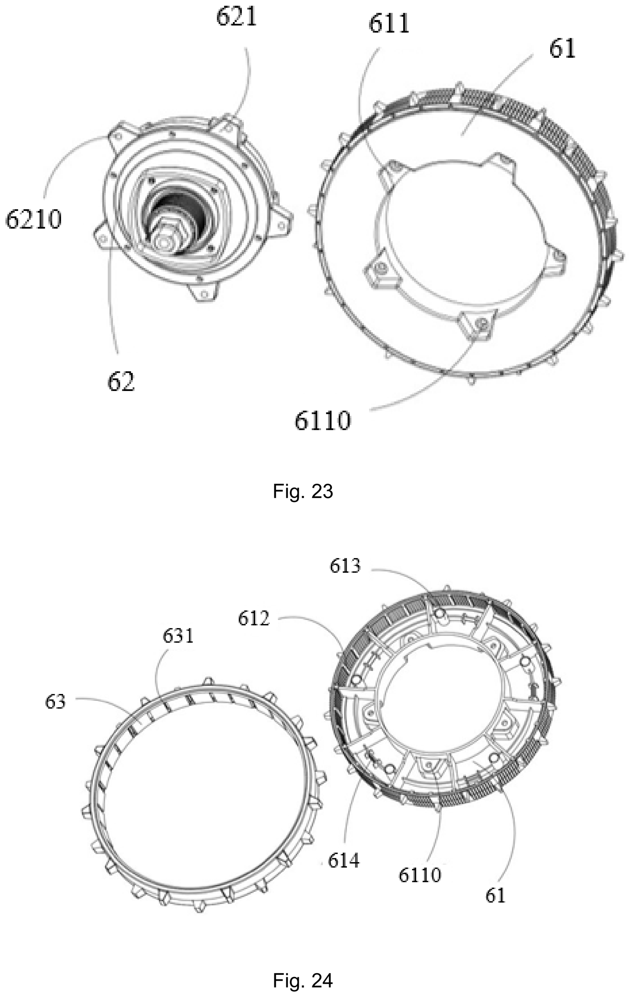

Please refer to FIG. 22 through FIG. 25. A protrusion 621 is arranged on an outer wall of the walking motor 62, a concave groove 611 is correspondingly arranged on the walking wheel 61, and when the walking motor 62 is assembled and fixed with the walking wheel 61, the protrusion 621 is accommodated in the concave groove 611.

In an embodiment, the protrusion 621 is a protruding block protruding outward from the outer wall of the walking motor 62, and there is a plurality of the blocks arranged at intervals. The concave groove 611 is arranged on the walking wheel 61, and the protruding block is accommodated in the concave groove. There are five protrusions 621 arranged in a ring on the outer wall of the walking motor 62. A distance between every two protrusions 621 is equal, and there are also five concave grooves 611 correspondingly. Of course, in other embodiments, a number of protrusions 621 and concave grooves 611 may be adjusted according to actual conditions, which is not limited here.

Please refer to FIG. 20 and FIG. 25. A first positioning hole 6210 is arranged on the protrusion 621, and a second positioning hole 6110 is correspondingly arranged on the concave groove 611. When the protrusion 621 is accommodated in the concave groove 611, the first positioning hole 6210 is aligned with the second positioning hole 6110, so that a screw 6211 passes through the first positioning hole 6210 and the second positioning hole 6110 to fixedly connect the protrusion 621 with the concave groove 611.

Please refer to FIG. 20 and FIG. 25. The mower 100 further includes a wheel cover 63 arranged on an outer side of the walking wheel 61, and the wheel cover 63 is buckled and connected with the walking wheel 61. A clamping groove 631 is arranged on the wheel cover 63, and a clamping strip 612 is correspondingly arranged on the walking wheel. The clamping strip 612 is accommodated in the clamping groove 631 to achieve a buckle connection between the walking wheel 61 and the wheel cover 63. In other words, the wheel cover 63 wraps around an outer side of the walking wheel 61 to replace the walking wheel 61 in direct contact with the ground during a rotation of the walking wheel 61. Of course, in other embodiments, other fixing methods may also be selected, as long as the wheel cover 63 is ensured to be detachable, which is no limited here.

Please refer to FIG. 20 and FIG. 25. The walking wheel 61 is provided with a detachable motor cover 64, and the motor cover 64 is arranged away from the chassis 4122 and can rotate together with the walking wheel 61. This means that the motor cover 64 is used to shield an outer side of the walking motor 62 to cooperate with the walking wheel 61 so that the walking motor 62 may be not exposed to an outside.

The motor cover 64 includes a first motor cover 641 buckled with the walking motor 61 and a second motor cover 642 installed on an outer side of the first motor cover 641, and the second motor cover 642 partially covers the first motor cover 641 so that the first motor cover 641 and the second motor cover 642 can be exposed at the same time. When the motor cover 64 is viewed from a front, the first motor cover 641 and the second motor cover 642 can be seen at the same time. The second motor cover 642 is smaller than the first motor cover 641. A buckle 6411 is arranged on the first motor cover 641, and a matching part 614 is correspondingly arranged on the walking wheel 61. The buckle 6411 and the matching part 614 cooperate with each other, so that the first motor cover 641 is buckled and connected with the walking wheel 61.

Please refer to FIG. 20 and FIG. 25. The walking wheel 61 is provided with an installation groove 613, the first motor cover 641 is correspondingly provided with an installation post 6412, and the installation post 6412 is accommodated in the installation groove 613 to achieve a fixed connection between the walking motor 61 and the first motor cover 641. In other embodiments, only one buckle 6411 and installation post 6412 may be arranged on the first motor cover 641, and only one matching part 614 and installation groove 613 may be arranged on the walking wheel 61. Other methods may also be selected. It is only necessary to ensure that the first motor cover 641 and the walking wheel 61 are fixed while being disassembled as needed, which is not limited here.

The first motor cover 641 is provided with an assembling groove 6413, and the second motor cover 642 is correspondingly provided with assembling posts 6421. The assembling posts 6421 is accommodated in the assembling groove 6413 to achieve a fixed connection between the first motor cover 641 and the second motor cover 642.

Please refer to FIG. 20 and FIG. 25. In this embodiment, the assembling posts 6421 are arranged along the outer wall surface and a central hollow area of the second motor cover 642. The assembly grooves 6413 correspond to the assembling posts 6421 to ensure the fixed connection between the first motor cover 641 and the second motor cover 642.

In summary, the mower 100 of the disclosure is provided with independent driving assemblies 600 on the two sides of the chassis 4122, and the driving assemblies 600 on the two sides both include the walking wheels 61 and walking motors 62. The walking wheel 61 is detachably assembled on the walking motor 62, so that a replacement of the walking wheel 61 is more convenient and the use cost is saved.

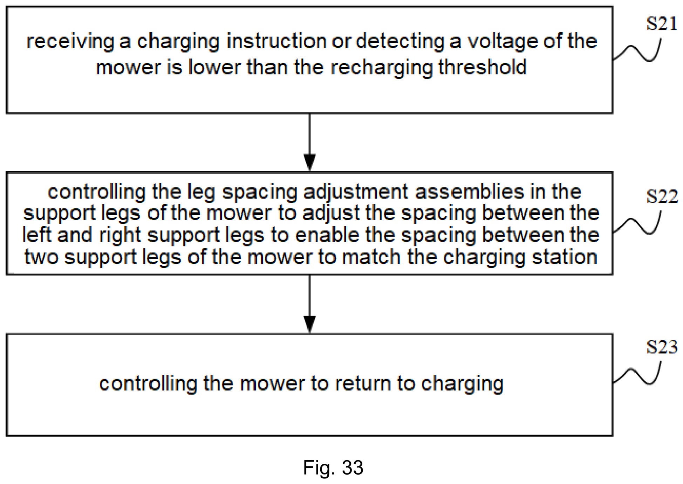

Please refer to FIG. 26 and FIG. 33. It may be understood that, a mowing height of the mower is determined by a distance of the mower blade from the ground. Traditional mowers adjust the cutting height by adjusting a distance between the machine body and the walking wheels, while the robotic mowers adjust the cutting height by adjusting a position of a cutting blade relative to the machine body. But the lawn is not flat, there are bumps or depressions, such as dirt slopes or pits. Whether it is the traditional mower or the robotic mower, when it encounters a dirt slope or a pit during walking, the mower as a whole will tilt and the cutter will also be in a tilt state. At this time, a traditional adjustment mechanism cannot adjust it to a horizontal state, which results in different mowing heights. Therefore, the disclosure provides the mower and a control method thereof. The mower can keep the main body of the mower in the horizontal state, thereby ensuring that a mowing height of the mower is always consistent. Please refer to FIG. 26 through FIG. 28. The mower 100 includes the main body 400, the working device 300, a plurality of support legs 700 and a control assembly 800. The working device 300 is installed at a bottom of the main body 400. The working device 300 is the cutter. The mower 100 is provided with the driving device to drive the working device 300 to mow. The plurality of support legs 700 are respectively installed on two sides of the bottom of the main body 400, and the walking wheels 701 are installed at a bottom of the support legs 700. The control assembly 800 is used to individually control and adjust a height of each support leg 700 and a width between the support legs 700 on the two sides of the main body 400.

Please refer to FIG. 26. In this embodiment, each walking wheel 701 is provided with a driving motor and a reduction gearbox. The driving motor drives the walking wheel 701, and power is transmitted to the walking wheel 701 through a transmission action of the reduction gearbox to drive the walking wheel 701 to rotate. In this embodiment, the driving motor in each walking wheel 701 is controlled by the control assembly 800, and a differential drive is realized between each walking wheel 701 through the control assembly 800 to realize a walking and turning of the mower 100.

Please refer to FIG. 26 through FIG. 28. In this embodiment, the support leg 700 includes a height adjustment assembly 71, a first end of the height adjustment assembly 71 is connected with the main body 400, and a second end of the height adjustment assembly 71 is connected with the walking wheel 701. The height adjustment assembly 71 is used to adjust a height of the support leg 700 to ensure a mowing height of the mower 100. In this embodiment, each support leg 700 further include a leg spacing adjustment assembly 72, a first end of the leg spacing adjustment assembly 72 is connected with the height adjustment assembly 71, and a second end of the leg spacing adjustment assembly 72 is connected with the main body 400, which means that the height adjustment assembly 71 is connected with the main body 400 through the leg spacing adjustment assembly 72, and the leg spacing adjustment assembly 72 is used to adjust a distance between the support legs 700 on the two sides of the bottom of the main body 400.

Please refer to FIG. 26 through FIG. 28. In this embodiment, the height adjustment assembly 71 includes a fixed housing 711, a telescopic housing 712, a first motor 713 and a first screw rod 714. The fixed housing 711 is connected with the main body 400 through the leg spacing adjustment assembly 72. A first end of the telescopic housing 712 is slidably installed in the fixed housing 711, and a second end of the telescopic housing 711 is connected with the walking wheel 701. The first screw rod 714 is installed in the fixed housing 711 and the telescopic housing 711, and the first screw rod 714 is fixedly connected with the telescopic housing 712. The first motor 713 is fixedly installed in the fixed housing 711 and connected with the first screw rod 714 to drive the first screw rod 714 to move linearly along an axial direction of the first screw rod, thereby driving the telescopic housing 712 to slide up and down in the fixed housing 711 to change a height of the support legs 700.

Please refer to FIG. 26 through FIG. 28. In this embodiment, the leg spacing adjustment assembly 72 includes a second motor 721 and a second screw rod 722. The second motor 721 is fixedly installed in the main body 400 and is connected with the second screw rod 722 to drive the second screw rod 722 to move linearly along an axial direction of the second screw rod. In this embodiment, one end of the second screw rod 722 is fixedly connected with the height adjustment assembly 71. Specifically, the second screw rod 722 is fixedly connected with the fixed housing 711. When the second motor 721 drives the second screw rod 722 to move along its axial direction, the second screw rod 722 drives the height adjustment assembly 71 to move left and right in a horizontal direction, thereby adjusting the spacing between the support legs 700 on the two sides of the main body 400. In this embodiment, the first motor 713 and the second motor 721 are screw motors. In some other embodiments, the first motor 713 and the second motor 721 may also be linear motors.

Please refer to FIG. 26 through FIG. 28. In this embodiment, the height adjustment assembly 71 and the leg spacing adjustment assembly 72 in each support leg 700 are electrically connected with the control assembly 800. Specifically, the control assembly 800 is electrically connected with the first motor 713 in each height adjustment assembly 71 and the second motor 721 in each leg spacing adjustment assembly 72 respectively, so that the height adjustment assembly 71 and the leg spacing adjustment assembly 72 in each support leg 700 may be individually controlled by the control assembly 800 to achieve a height adjustment of each support leg 700 and a spacing between the support legs 700 on the two sides of the main body 400.

It should be noted that, after the leg spacing adjustment assembly 72 adjusts the spacing between the support legs 700 on the two sides of the main body 400, the screw rod may be locked by its own self-locking function so that the support legs 700 are fixed at a required height and width. Please refer to FIG. 26 through FIG. 28. In some other embodiment, a locking structure 73 may also be arranged on the height adjustment assembly 71 and the leg spacing adjustment assembly 72. The locking structure 73 is used to lock the support legs 700 when the height adjustment assembly 71 adjusts the support legs 700 to a desired height, and to lock the support legs 700 after the leg spacing adjustment assembly 72 adjusts the distance between the support legs 700 on the two sides of the main body 400, so that the support legs 700 are fixed at the desired height and width.

Please refer to FIG. 26 through FIG. 28. In this embodiment, the locking structure 73 includes a limiting hole 731, a limiting screw rod 732 and a locking motor 733. Specifically, in the height adjustment assembly 71, a plurality of limiting holes 731 are arranged at intervals on the first screw rod 714 along an axial direction of the first screw rod 714. The locking motor 733 is fixedly installed in the fixed housing 711. The limiting screw rod 732 is connected with the locking motor 733. The limiting screw rod 732 is driven by the locking motor 733 to move along an axial direction of the limiting screw rod 732 so that the limiting screw rod 732 may be inserted into the limiting hole 731 on the first screw rod 714 to achieve a locking of the height adjustment assembly 71. In the leg spacing adjustment assembly 72, the plurality of limiting holes 731 are arranged on the second screw rod 722 at intervals along an axial direction of the second screw rod 722, the locking motor 733 is fixedly installed on the main body 400, the locking motor 733 is connected with the limiting screw rod 732, and the limiting screw rod 732 is driven by the locking motor 733 to move along the axial direction of the limiting screw rod 732, so that the limiting screw rod 732 may be inserted into the limiting hole 731 on the second screw rod 722 to achieve a locking of the leg spacing adjustment assembly 72. In this embodiment, a forward and reverse rotation of the motor directly drives the screw rod to move forward and backward, which may effectively improve efficiency of a height adjustment of the support legs 700 and a leg spacing adjustment.

Please refer to FIG. 26 through FIG. 28. In this embodiment, the control assembly 800 is further used to control the locking motor 733 to drive the limiting screw rod 732 to be inserted into the limiting hole 731, so as to lock the height adjustment assembly 71 and the leg spacing adjustment assembly 72.

Please refer to FIG. 26 through FIG. 28. In some, other embodiments, the height adjustment assembly 71 and/or the leg spacing adjustment assembly 72 may also be configured as an electric pushing rod, which enables the height adjustment and leg spacing adjustment of the support legs 700.

Please refer to FIG. 26 through FIG. 28. In this embodiment, in order to facilitate adjusting the distance between the support legs 700 on the two sides of the main body 400, a rotating device may be installed between the height adjustment assembly 71 and the walking wheel 701. Specifically, the rotating device is connected with the telescopic housing 712 and the walking wheel 701 respectively. The rotating device drives the walking wheel 701 to rotate around an axis of the support legs 700 to change a direction of the walking wheel 701, so that the leg spacing adjustment assembly 72 may drive the support legs 700 to move left and right, thereby realizing the leg spacing adjustment.

Please refer to FIG. 26 through FIG. 28. In this embodiment, the control assembly 800 includes a detection module 81 and a control module 82. The detection module 81 and the control module 82 are electrically connected with each other. The detection module 81 is used to detect a tilt state of the main body 400. The control module 82 controls the height adjustment assembly 71 in the corresponding support legs 700 according to the tilt state of the main body 400 detected by the detection module 81, so as to adjust the height of the support legs 700 and thus ensure that the main body 400 always remains in the horizontal state. In this embodiment, the detection module 81, for example, is a 9-axis motion processing chip. Through the control assembly 800, the height of each support leg of the machine body may be adjusted individually. In conjunction with the 9-axis motion processing chip, the height of the mowed lawn may be kept consistent even when the lawn is uneven, which enables the lawn to be more aesthetically pleasing.

In an embodiment of the disclosure, the mower 100 further includes positioning elements, and the positioning elements include but not limited to GPS assemblies, DGPS assemblies, RTK assemblies, SLAM assemblies, etc. The mower 100 determines its current position based on positioning elements and mows the lawn according to a predetermined working path. When the mower detects that the main body 400 is tilted, it records and marks position information on the working path. When the mower runs to this position again, the height or spacing of the support legs may be adjusted in advance to avoid the mower tilting.

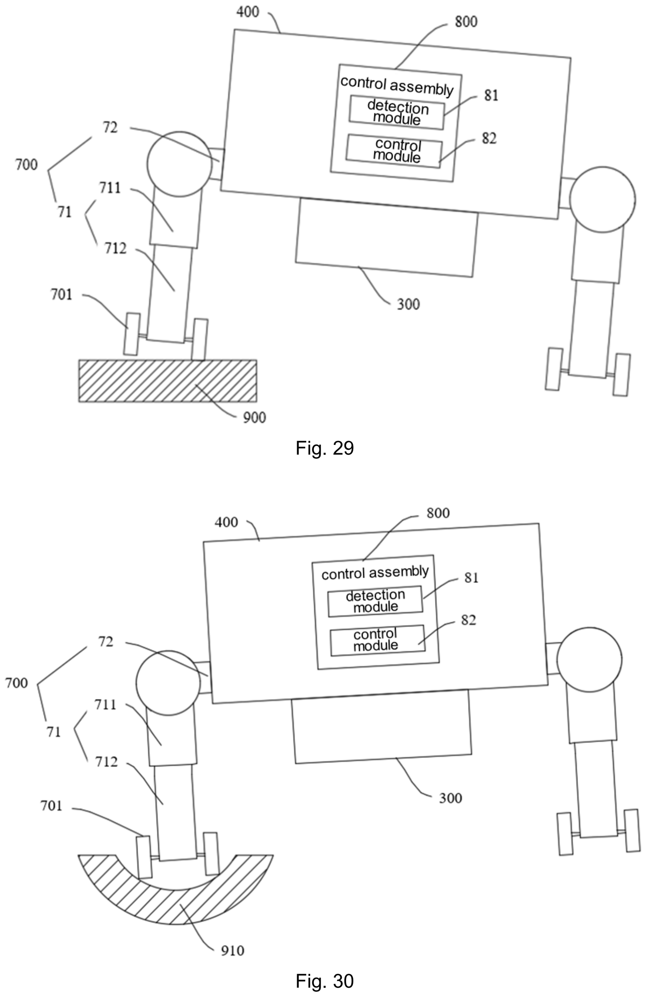

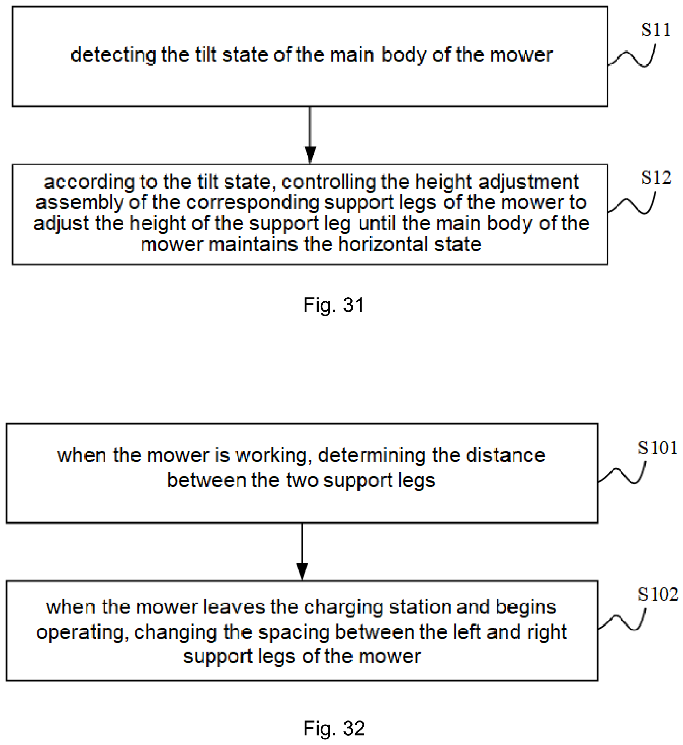

Please refer to FIG. 26 through FIG. 31. In an embodiment, the disclosure provides the control method of the mower, the control method includes operations as follows.

A tilt state of the machine body of the mower is detected. Specifically, the tilt state of the main body 400 of the mower 100 is detected by the detection module 81.

According to the tilt state, the height adjustment assembly of the corresponding support legs of the mower is controlled to adjust the height of the support leg until the machine body of the mower maintains the horizontal state. In an embodiment, the control module 82 controls the corresponding leg spacing height adjustment assembly of the support legs to adjust the height of the support legs according to the tilt state of the machine body detected by the detection module 81 until the machine body of the mower is kept horizontal.

Please refer to FIG. 26, FIG. 29 through FIG. 31. For example, when a left side of the mower 100 passes over a dirt slope or pit, the detection module 81 detects that the main body 400 tilts upward or downward as it passes over a left side of the dirt slope 900 or pit 910. Then, the control module 82 controls the height adjustment assembly 71 in a left support leg 700 to lower the height of the left support leg 700 until the main body 400 is in the horizontal state. Alternatively, when the mower 100 passes over the dirt slope 900 or pit 910, the detection module 81 detects that a front side of the main body 400 tilts upward or downward. Then, the detection module 81 notifies the control module 82 to control the height adjustment assembly 71 in the support leg 700 to lower the height of the front support leg 700 and/or raise the height of the rear support leg 700 until the main body 400 is in the horizontal state. This ensures that the height of the mowed lawn remains consistent even on uneven lawns, which enables the lawn to be more aesthetically pleasing.

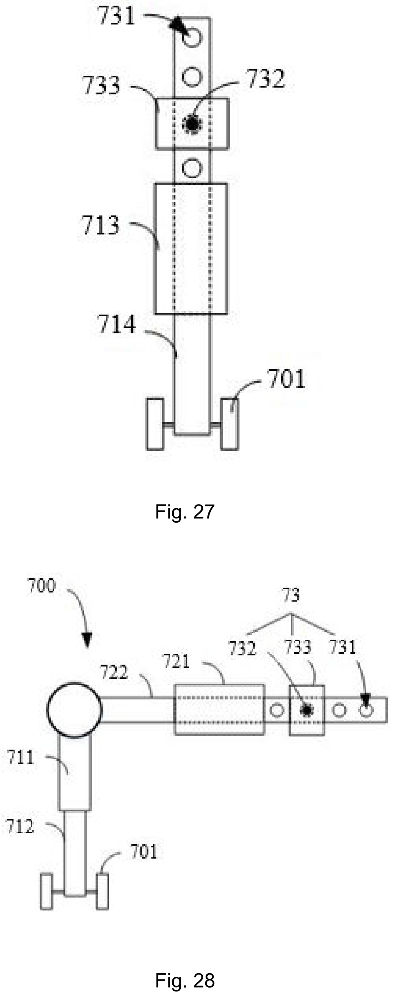

Please refer to FIG. 27 through FIG. 32. In an embodiment, the disclosure provides the control method of the mower, the control method includes operations as follows.

A spacing between left and right support legs of the mower when it is working is determined.

When the mower leaves a charging station and begins operating, the spacing between the left and right support legs of the mower is changed. This means that when the mower is working, the distance between the two support legs 700 is determined. When the mower leaves the charging station to work, the distance between the two support legs 700 is controlled to change so as to achieve the distance between the left and right support legs 700 when the mower is working.

Please refer to FIG. 26 through FIG. 33. In this embodiment, the control method further includes operations as follows.

When a charging instruction is received or a voltage of the mower is lower than a recharging threshold, the leg spacing adjustment assembly 72 in the support legs of the mower is controlled to adjust the spacing between the left and right support legs so that the spacing between the two support legs of the mower matches the charging station. Specifically, when the control assembly 800 receives a charging instruction or detects that a mower voltage is lower than a recharging threshold, the control assembly 800 controls the leg spacing adjustment assembly 72 to adjust the spacing between the support legs 700 on the two sides of the main body 400 so that the spacing between the two support legs 700 of the mower matches the charging station. It should be noted that, in some embodiments, before adjusting the distance between the support legs 700 on the two sides of the main body 400, the control assembly 800 controls the rotating device to change the direction of the walking wheels 701 so that the leg spacing adjustment assembly 72 may adjust the distance between the support legs 700. After the adjustment is completed, the control assembly 800 controls the rotating device to enable the walking wheels 701 to return to their original direction. It should be noted that, when a charging instruction is received or the mower voltage is lower than the recharging threshold, the control assembly 800 controls the working device 300 to stop working before adjusting the leg spacing.

The mower is controlled to return to charging.

Please refer to FIG. 26 through FIG. 32. In this embodiment, the control method further includes the distance between the left and right support legs of the mower increasing or decreasing sequentially.

Please refer to FIG. 26 through FIG. 32. In this embodiment, the control method further includes the distance between the left and right support legs of the mower varying randomly. The control assembly 800 controls the mower 100 to randomly change the spacing between the left and right support legs to avoid repeated rolling on the lawn and causing indentations. Before returning to the charging station, the mower will adjust the height of the support legs to its initial height for connecting the charging station.

In summary, through arranging support legs with height adjustment assemblies around the machine body, and individually controlling each height adjustment assembly through the control assembly, different support legs may be adjusted to different heights. During an operation of the mower, when encountering a dirt slope or a pit, the machine body of the mower tilts, and the control assembly can control the height adjustment assemblies in the corresponding support legs according to the tilt state of the machine body, so that the machine body of the mower remains in the horizontal state, thereby ensuring that a mowing height of the mower always remains consistent.

In addition, through arranging support legs with leg spacing adjustment assemblies around the machine body, and individually controlling each leg spacing adjustment assembly through the control assembly, during a returning process of the mower, the leg spacing adjustment assembly is controlled by the control assembly so that the walking wheels of the mower are randomly adjusted to a certain width, and then return to charge, so as to avoid repeated crushing of the lawn and causing crushing traces.

In addition, when power of the robotic mower drops below a certain threshold, it needs to return to the charging station to recharge. Since the charging station is a fixed installation, the lawn in front of the charging station will have indentations due to the repeated rolling of the mower, which also affects an appearance of the lawn.

The above embodiments are only used to illustrate the technical solutions of the disclosure and not to limit it. Although the disclosure has been described in detail with reference to the preferred embodiments, those of ordinary skill in the art should understand that the technical solutions of the disclosure may be modified or equivalently replaced, and these modifications or replacement do not cause an essence of the corresponding technical solutions to deviate from a spirit and scope of the technical solutions of the various embodiments of the disclosure, and should all be included within a protection scope of the disclosure.

Except for the technical features described in the specification, the remaining technical features are known to those skilled in the art, in order to highlight the innovative features of the disclosure, the remaining technical features will not be repeated herein.

## Claims

1. A mower, comprising:
a main body;
a height adjustment motor, the height adjustment motor installed in the main body;
a gear assembly, the gear assembly connected with the height adjustment motor and driven by the height adjustment motor;
a clutch assembly, the clutch assembly arranged between the gear assembly and the height adjustment motor, the clutch assembly including a connecting shaft, and the connecting shaft movably connected with the height adjustment motor; and
a cutter motor assembly, the cutter motor assembly installed inside the main body and comprising an adjustment rod, the adjustment rod fixed on the cutter motor assembly, driven by the gear assembly, and provided with an end part, when the end part abutting the gear assembly, the connecting shaft separated from the height adjustment motor.

2. The mower according to claim 1, wherein, the gear assembly comprises a first gear and a connecting part arranged on an axis of the first gear, the connecting shaft is movably connected with the connecting part, the height adjustment motor comprises an output shaft and a shaft sleeve sleeved on the output shaft, and at least part of the shaft sleeve is accommodated in the connecting part and abuts against the connecting shaft.

3. The mower according to claim 2, wherein, the shaft sleeve is provided with a first limiting groove, the connecting part is provided with a second limiting groove partially overlapping with the first limiting groove, the connecting shaft is capable of moving in the second limiting groove and being accommodated in an overlapping part of the first limiting groove and the second limiting groove so as to enable the output shaft to be engaged with the first gear; when the connecting shaft moves out of the overlapping part of the first limiting groove and the second limiting groove, and the output shaft is separated from the first gear.

4. The mower according to claim 3, wherein, the first limiting groove is concave from an end surface of the shaft sleeve along the axis of the first gear, a concave direction of the second limiting groove is the same as a concave direction of the first limiting groove, the first limiting groove is arc-shaped, and the connecting shaft is cylindrical.

5. The mower according to claim 3, wherein, the mower comprises an outer frame, and the clutch assembly comprises an elastic component, the elastic component is arranged between the connecting shaft and the outer frame to keep the connecting shaft accommodated in the overlapping part of the first limiting groove and the second limiting groove.

6. The mower according to claim 2, wherein, the gear assembly comprises a second gear meshed with the first gear, the second gear is provided with a first perforation hole, the adjustment rod is accommodated in the first perforation hole and is capable of being lifted and lowered reciprocally in the first perforation hole.

7. The mower according to claim 6, wherein, an internal thread is arranged on an inner wall surface of the first perforation hole, and an external thread is arranged on an outer wall surface of the adjustment rod, the external thread is engaged with the internal thread, and the second gear rotates to drive the adjustment rod to be lifted and lowered reciprocally.

8. The mower according to claim 7, wherein, the cutter motor assembly comprises a fixing plate connected with the end part, the adjustment rod is driven by the internal thread to be lifted and lowered until the fixing plate abuts against the gear assembly to limit a rotation of the gear assembly.

9. The mower according to claim 1, wherein, the cutter motor assembly further comprises a positioning component and a plurality of positioning teeth distributed on the positioning component, the mower comprises a sensing device and a sensing groove arranged on the sensing device, at least portion of the plurality of the positioning teeth extends into the sensing groove, when the cutter motor assembly is lifted and lowered reciprocally, the plurality of the positioning teeth moves in the sensing groove.

10. The mower according to claim 9, wherein, an arrangement direction of the positioning component is the same as a lifting direction of the adjustment rod, and the plurality of the positioning teeth is arranged in a zigzag shape on the positioning component.

11. The mower according to claim 1, further comprising:
an outer housing, the outer housing detachably connected with the main body;
a lamp, the lamp fixedly connected with the outer housing and exposed outside the outer housing; and
a cable assembly, the cable assembly connecting the lamp with the main body;
wherein, the cable assembly comprises a first connecting part and a second connecting part, the first connecting part and the second connecting part are detachably connected with each other, the first connecting part is fixedly connected with the lamp through a first cable, and the second connecting part is fixedly connected with the main body through a second cable.

12. The mower according to claim 11, wherein, the first connecting part and the second connecting part are located between the outer housing and the main body, and are detachably fixed on an outer wall surface of the main body.

13. The mower according to claim 11, wherein, the main body comprises a body and a casing covered on the body, the casing is provided with a second perforation hole, the second cable correspondingly connected with the second connecting part passes through the second perforation hole and is fixedly connected with the main body.

14. The mower according to claim 13, wherein, the casing is further provided with a plug-in part, the second connecting part is correspondingly provided with a plug-in groove, and the plug-in part is accommodated in the plug-in groove to achieve a detachable connection between the casing and the second connecting part.

15. The mower according to claim 1, further comprising a driving assembly, the driving assembly arranged on two sides of the body of the mower and comprising a walking motor and a walking wheel detachably assembled on an outer side of the walking motor, the walking motor capable of rotating and driving the walking wheel to rotate together;
wherein, a protrusion is arranged on an outer wall of the walking motor, a concave groove is correspondingly arranged on the walking wheel, and when the walking motor is assembled and fixed with the walking wheel, the protrusion is accommodated in the concave groove.

16. A height adjustment method applied to a mower, the mower comprising:
a main body;
a height adjustment motor, the height adjustment motor installed in the main body;
a gear assembly, the gear assembly connected with the height adjustment motor and driven by the height adjustment motor;
a clutch assembly, arranged between the gear assembly and the height adjustment motor, the clutch assembly comprising a connecting shaft, and the connecting shaft movably connected with the height adjustment motor;
a cutter motor assembly, the cutter motor assembly installed inside the main body and comprising an adjustment rod, the adjustment rod fixed on the cutter motor assembly, driven by the gear assembly, and provided with an end part; and
a controller, the controller electrically connected with the height adjustment motor;
wherein, the controller is configured to: control the height adjustment motor to rotate so as to drive the cutter motor assembly to be lifted and lowered;
monitor a current of the height adjustment motor; and
control the height adjustment motor to stop or run when a current of the height adjustment motor fluctuates periodically.

17. The height adjustment method applied to the mower according to claim 16, wherein, the mower further comprises a sensing device, and the sensing device senses a height change of the cutter motor assembly and is communicated with the controller.

18. The height adjustment method applied to the mower according to claim 17, further comprising: determining that the height adjustment motor is idling when the current of the height adjustment motor is not 0 and the height change of the cutter motor assembly is 0 within a preset period of time.

19. The height adjustment method applied to the mower according to claim 18, wherein, the sensing device comprises positioning teeth and a sensing groove, and senses the height change by calculating a number of the positioning teeth passing through the sensing groove.

20. The height adjustment method applied to the mower according to claim 19, further comprising:
calculating the number of the positioning teeth corresponding to a set height;
reversely driving the height adjustment motor; and
stopping driving the height adjustment motor when detecting that the number of the positioning teeth passing through the sensing groove is achieved.
